(19) Europäisches Patentamt / European Patent Office / Office européen des brevets

(11) **EP 2 642 504 B1**

(12) **EUROPEAN PATENT SPECIFICATION**

(45) Date of publication and mention
of the grant of the patent:
**27.03.2019 Bulletin 2019/13**

(21) Application number: **13160699.8**

(22) Date of filing: **26.07.2007**

(51) Int Cl.:
*H01J 3/14* (2006.01)   *G02B 5/04* (2006.01)
*G02B 26/08* (2006.01)   *G02B 17/00* (2006.01)
*F03G 7/00* (2006.01)   *G01J 1/56* (2006.01)
*F03G 6/06* (2006.01)

(54) **Method and apparatus for communicating radiation pressure provided by a light wave**

Verfahren und Vorrichtung zur Weiterleitung eines von einer Lichtwelle erzeugten Strahlungsdrucks

Procédé et appareil pour communiquer une pression de rayonnement fournie par une onde lumineuse

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.07.2006 US 833336 P**

(43) Date of publication of application:
**25.09.2013 Bulletin 2013/39**

(60) Divisional application:
**18182986.2 / 3 410 460**

(62) Document number(s) of the earlier application(s) in accordance with Art. 76 EPC:
**07836281.1 / 2 070 101**

(73) Proprietor: **Spacedesign Corporation**
**Houston, TX 77251-1045 (US)**

(72) Inventor: **Clay, Joseph M.**
**Houston, TX 77019 (US)**

(74) Representative: **J A Kemp**
**14 South Square**
**Gray's Inn**
**London WC1R 5JJ (GB)**

(56) References cited:
**EP-A2- 0 225 123        FR-A1- 2 501 828**
**US-A- 4 120 565        US-A1- 2004 003 584**
**US-A1- 2004 256 539    US-A1- 2005 059 766**

EP 2 642 504 B1

**Description**

## BACKGROUND OF THE INVENTION

This application claims the benefit of the filing date of United States Provisional Application Serial No. 60/833,336, filed on July 26, 2006 (now pending).

The present invention relates generally to a method and apparatus for harnessing the energy present in an electromagnetic light wave. In particular, the present invention relates to the utilization of radiation pressure in the light wave. The invention also relates to a method and apparatus for communicating or otherwise manipulating the light wave and/or communicating radiation pressure provided by the light wave.

## BRIEF SUMMARY OF THE INVENTION

The invention is defined in the appended set of claims. In one aspect of the present invention, a method is provided for communicating radiation pressure provided by a light wave. The method entails positioning a reflective prism having a near total reflective surface, including an initial transparent surface and a pair of reflective surfaces each positioned at an angle relative to the initial transparent surface. Then, a light wave is directed toward the reflective prism, such that the light wave is generally normal to the transparent surface and passes therethrough. The light wave further reflects from the first and then the second reflective surface and exits the prism through the transparent surface. In this way, radiation pressure communicated by the reflecting light wave acts on the prism.

In another aspect, an apparatus is provided for communicating radiation pressure provided by a light wave. The apparatus includes a containment chamber configured to contain the propagation of light waves and an optic switch selectively operable in an open mode and a close mode. In open mode, the optic switch allows a light wave to enter the containment chamber and in close mode, the optic switch prevents escape of the light wave from the containment chamber. The apparatus further includes a reflective mirror positioned at one end of the containment chamber. The reflective mirror has a near total reflective surface. The optic switch and the reflective mirror are positioned such that the optic switch is operable to introduce a light wave into the containment chamber in the direction of the reflective mirror and such that the light wave reflects against the near total reflective surface to cause radiation pressure to act on the reflective mirror.

In another aspect, an apparatus is provided for communicating radiation pressure provided by a light wave. The apparatus includes a reflective prism having a near total reflective surface (NTRS), the reflective prism being a quartz prism having a transparent surface and a pair of reflective surfaces. The apparatus also includes a light wave source positioned to direct a light wave in a direction of the reflective prism and generally normal to the transparent surface such that the light wave passes through the transparent surface and reflects from the reflective surfaces, thereby causing radiation pressure communicated by the light wave to act on the NTRS.

In another aspect of the present invention, a method and apparatus are provided for communicating and/otherwise manipulating light waves. In another aspect of the invention, a method and apparatus are provided for communicating a light wave by and/or through an interface. More specifically, the invention provides a method and apparatus of operating, *i.e.,* switching, the interface between an open or closed (or transparent or reflective state or mode). Preferably, the switching operation entails manipulating the total index of refraction of the interface. In the preferred mode, the method involves eliminating the boundary interface by way of compression.

These and other features and advantages of the present invention will be apparent to those skilled in the art from the following Detailed Description of preferred embodiments, and the drawings which:

## BRIEF DESCRIPTION OF THE DRAWINGS

FIGS. 1A and 1B are simplified schematics and illustration of an apparatus, such as a photon engine, for utilizing radiation pressure associated with light waves;

FIG. 2 is a simplified schematic of a piston assembly suitable for use with the apparatus in FIG. 1;

FIG. 3 is a simplified schematic of an alternative photon engine;

FIGS. 4a and 4b are illustrations of prisms that may be used in conjunction with a photon engine;

FIG 5 is a simplified schematic of yet another apparatus; and

FIG. 6a is a simplified plan view schematic illustrating an alternative apparatus and a method of operating the apparatus;

FIG. 6b is a side elevation view of the apparatus in FIG. 6a;

FIGS. 7A-7H are simplified illustrations of operation and structure of various components and/or stages of the engine;

FIG. 8 is a simplified illustration of major stages/components of an engine and engine operation;

FIG. 9 is a simplified diagram of light multiplier;

FIG. 10 is an illustration of an intensified beam generated by a light multiplier;

FIG. 11 is an illustration of various modes or stages of a light switch;

FIGS. 12 are graphs illustrating performance of a light switch;

FIG. 13A is a plan view of movable prism according to an alternative embodiment;

FIG. 13B is cross-sectional view across FIG. 13A;

FIG. 14A is a diagram of the movable prism illustrating interaction between the surfaces of the prism and a light beam;

FIG. 14B is an illustration of a participating media through which a representative energy packet travels;

FIG. 15 is an illustration of exemplary temporal ray tracing continuum diagram;

FIG. 16 is an illustration of exemplary temporal ray tracing flat land diagram;

FIG. 17 is an illustration of exemplary control volume representation of a participating media region;

FIG. 18A is an illustration of an exemplary photon engine and ray paths therefor;

FIG. 19 is an illustration of an alternative exemplary photon engine and ray paths therefor; and

FIGS. 20A-C are simplified illustrations of an alternative light switch for the engine of FIG. 19.

## DETAILED DESCRIPTION OF THE INVENTION

The present application is related to U.S. Application Serial No.: 10/836,774 and International Application No.: PCT/US2004/008495. A substantial portion of these disclosures is provided herein, in the Detailed Description, to serve as background and context for the various aspects of the present invention.

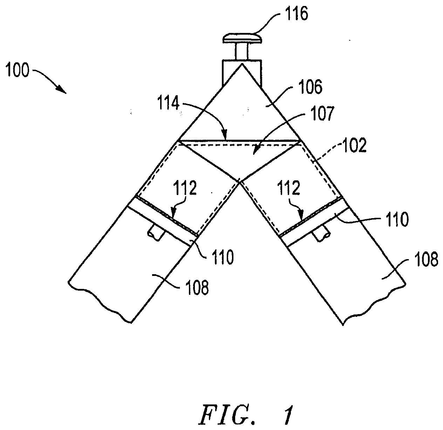

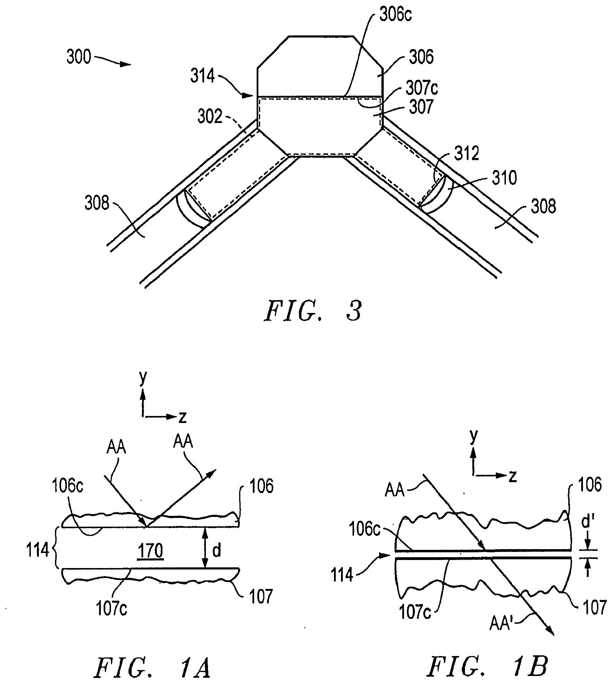

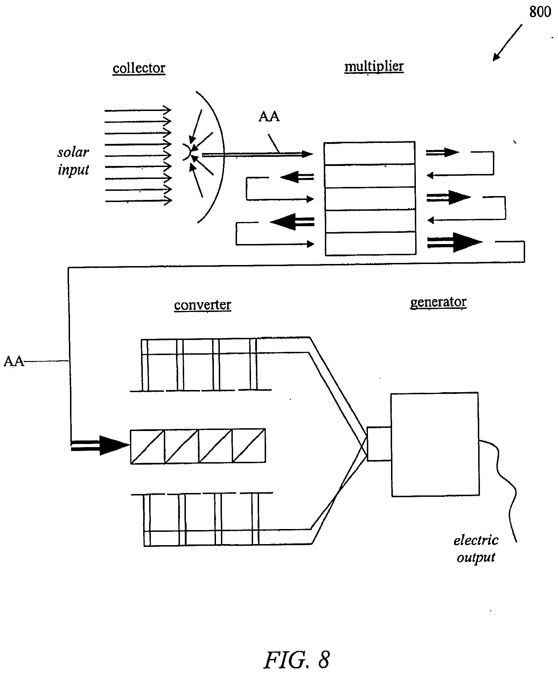

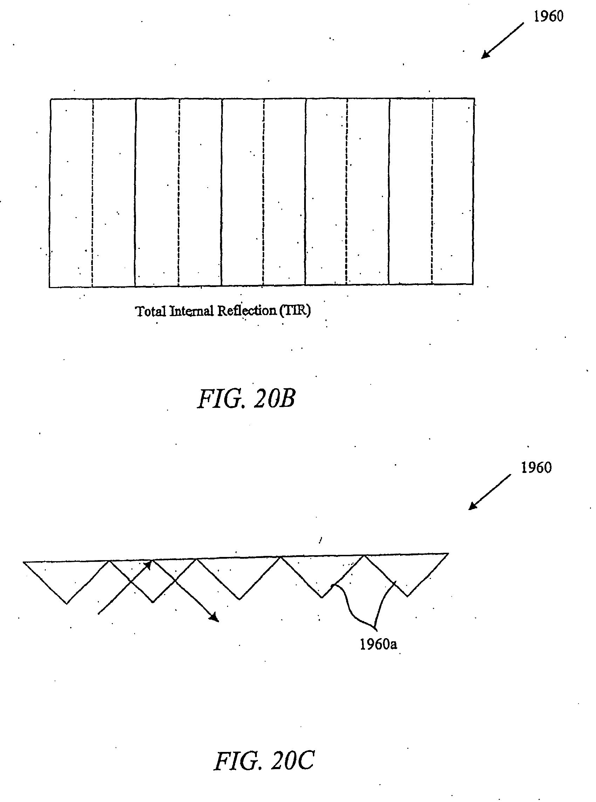

FIGS. 1-7 are provided to illustrate an apparatus and/or method prior to the present invention. FIGS. 8- 20 are introduced to illustrate an apparatus and method according to the present invention. Various aspects of the invention are embodied in these additional Figures.

The present invention relates generally to the utilization of radiation pressure inherent or obtainable from a light wave. The source of this radiation pressure is provided by a light source, or more specifically, propagating electromagnetic waves directed from a light source into or within the apparatus of the invention. The present invention also relates generally to methods and apparatus for communicating or otherwise manipulating such light waves. Operation of a photon engine of the invention entail employment of this aspect of the invention. Generally, the electromagnetic waves are directed into a containment chamber through at least one operable prism that functions in a switching mode. In a preferred embodiment, a primary prism and a secondary prism are used, and are operated together to provide a light switch injection valve, which either reflects light entering the first prism or passes light into the containment chamber.

Operation of the light switch (discussed below in respect to FIGS. 1-7) is based on an optical phenomenon wherein two individual media (*i.e.,* prisms) may be compressed along an interface so that the media combined act as one. First, light is introduced into the primary prism at a predetermined angle. With the light switch in the closed or non-operative mode, the light reflects off a back face or wall of the primary prism. To open the switch and place it in the operative mode, the primary and secondary prisms, *i.e.,* the first and second individual media, are compressed against each other (or more particularly, the secondary prism compresses against or toward the primary prism) through operation of an external driving device. In doing so, the boundary between the two prisms, *i.e.,* the common face, is removed, and the two media function as one. Typically, this boundary may be formed or provided by an air gap or vacuum (in the closed mode) having an index of refraction different from the prism material. Light directed into a first prism, therefore, passes through the boundary with the second prism, through the second prism and enters a containment chamber. It is further advantageous to direct light into the primary prism at a predetermined angle so that the light enters and then propagates within the containment chamber at an angle that is normal to a reflective mirror movably mounted within the chamber.

With light contained in the containment chamber, the light switch is closed. Thus, the light wave or light in the containment chamber maintains columniation and continuously propagates therein. More precisely, the contained light reflects off a first reflective mirror at a normal angle, then against a face of the secondary prism at a nearly 45° angle or other predetermined angle, and then reflects off a second mirror also at a normal angle. These three reflections make up one full cycle which is repeated within a known, predetermined time frame. The time frame also preferably corresponds to 1/2 of the operating frequency of the light switch: between opened and closed modes. During each cycle, the light cycles between the three reflective surfaces at a high rate so that radiation pressure is transmitted to or through the two mirror surfaces thereby converting or translating the energy of the light wave to mechanical work, i.e., movement of the mirror. In preferred embodiments, the mirror is operatively connected to a piston and contained in a cylinder assembly the cylinder preferably does not absorb the light) so as to operate as an engine.

To facilitate description of the invention, a brief explanation of certain concepts is first provided.

The light wave which is the object of the inventive method is an electromagnetic wave. Electromagnetic waves transport linear momentum making it possible to exert a mechanical pressure on a surface by shining a light on it the surface. It should be understood that this pressure is small for individual light photons. But given a sufficient number of photons a significant mechanical pressure may be obtained.

Maxwell (J.C.) showed the resulting momentum p for a parallel beam of light that is totally absorbed is the energy U divided by the speed of light c.

$$(1) \quad p = \frac{U}{c}$$

If the light beam is totally reflected the momentum resulting at a normal incidence to the reflection is twice the total absorbed value.

$$(2) \quad p = \frac{2U}{c}$$

These examples represent the two ends of the spectrum for momentum transfer. At one end the totally absorbed beam demonstrates the totally inelastic case where the particles stick together and the most kinetic energy is lost, typically, to another form of energy such as thermal energy or deformation. At the other end of the spectrum, a totally reflected beam demonstrates a completely elastic collision where kinetic energy is conserved.

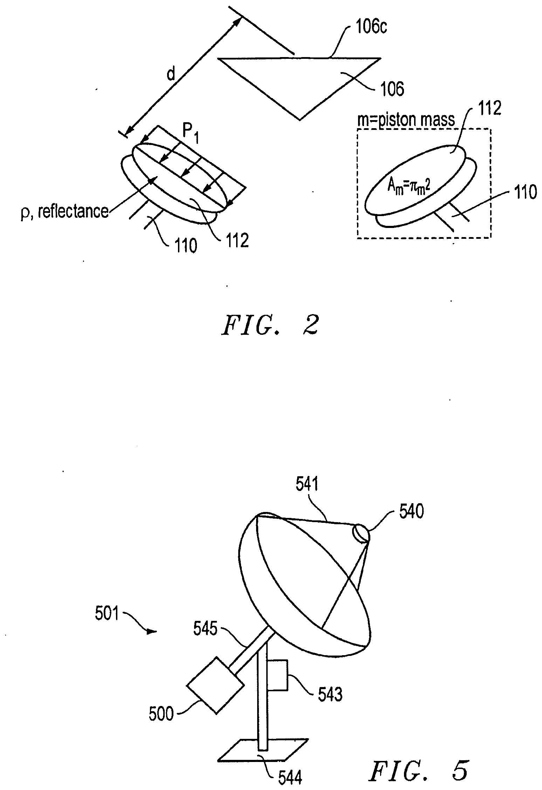

With reference to FIG. 2, the following sections provide calculations on the power produced by an apparatus and method, i.e. an engine, according to the invention. The calculations can be divided into four sections: Force (F); Time (T); Work (W); and Power (P).

Maxwell [2] showed the resulting momentum p is twice the energy, $U$, divided by the speed of light, $c$, for a parallel beam of light totally reflected at an angle normal to the incidence.

$$(3) \quad p = \frac{2U}{c}$$

This pressure can be multiplied by compressing the beam from its initial length, $l_i$, to the compressed length, $l_c$. The multiplied beam has an initial radiation pressure, $p_0$, that enters the photon engine containment chamber at time 0 (zero), that is found by the equation.

$$(4) \quad p_0 = \frac{l_i p}{l_c}$$

The change in the radiation pressure can be described by the reflectivity (including absorption from participating media), red-shift caused by the movable reflective surface, and the transmission through the light switch.

$$(5) \quad p_1 = \rho_m \tau_s p_0 \frac{c - v_1}{c}$$

Generalizing the above equations for arbitrary time n the radiation pressure, $p_n$, for bounce n is found by the equation.

$$(6) \quad p_n = \rho_m{}^n \tau_s{}^n p_0 \left( \left( \frac{c - v_{n-1}}{c} \right)! \right)$$

The time the beam is incident on the mirror is a function of the red-shift. After each red-shift the beam length increases which increases the incident time.

$$(7) \qquad l_1 = l_0 + v_0 t_0 \Rightarrow t_1 = t_0 \frac{c}{c - v_0}$$

Generalizing the above equation for arbitrary time n the incident time is shown by the equation.

$$(8) \qquad t_n = t_0 \left( \left( \frac{c}{c - v_{n-1}} \right)! \right)$$

The velocity increase, $\Delta v_n$, of the piston head at arbitrary time $n$ is calculated by the equation.

$$(9) \qquad \Delta v_n = \frac{\rho_n \tau_n p_{n-1} A_m}{m} t_{n-1}$$

The velocity, $v_z$, at time $z$ is calculated by summing v over the time 0 to $z$.

$$(10) \qquad v_z = \sum_{n=1}^{z} \Delta v_n + v_0 = \sum_{n=1}^{z} \frac{\rho_m \tau_s p_{n-1} A_m}{m} t_{n-1} + v_0$$

$$(11) \qquad v_z = \frac{\rho_m \tau_s A_m}{m} \sum_{n=1}^{z} p_{n-1} t_{n-1} + v_0$$

$$(12) \qquad v_z = \frac{\rho_m \tau_s A_m}{m} \sum_{n=1}^{z} \rho_m{}^n \tau_s{}^n p_0 \left( \left( \frac{c - v_{n-1}}{c} \right)! \right) t_0 \left( \left( \frac{c}{c - v_{n-1}} \right)! \right) + v_0$$

$$(13) \qquad v_z = \frac{\rho_m \tau_s A_m}{m} p_0 t_0 \sum_{n=1}^{z} \rho_m{}^n \tau_s{}^n + v_0$$

The work, $W$, generated by the photon engine is calculated by the equation.

$$(14) \qquad W = \frac{1}{2} m \left( v_z{}^2 - v_0{}^2 \right)$$

$$(15) \qquad W = \frac{1}{2} m \left( \left( \frac{\rho A_m}{m} p_0 t_0 \sum_{n=1}^{z} \rho_m{}^n \tau_s{}^n + v_0 \right)^2 - v_0{}^2 \right)$$

The summation can be re-written using a power series solution. The result is the short form of the governing work equation.

$$(16) \qquad W = \frac{1}{2} m \left( \left( \frac{p_0 A_m t_0}{m} \left( \frac{1 - (\rho_m \tau_s)^z}{1 - \rho_m \tau_s} \right) + v_0 \right)^2 - v_0{}^2 \right)$$

Now turning to FIGS. 1-7, these Figures illustrate several embodiments of an apparatus according to the invention. Specifically, each of Figs. 1, 3, 5, and 7 depict an exemplary photon engine according to the invention and various devices for use therewith, also according to the invention. These Figures also depict devices for communicating or otherwise manipulating light waves, according to the invention. One of these inventive devices is a compression boundary light switch. Another of these devices is a primary prism capable of multiplying or splitting a light wave introduced therein (*i.e.,* prior to introduction into the containment chamber) to increase its intensity.

FIG. 1 is a simplified schematic of a system and/or apparatus 100 that manipulates or otherwise communicates light or light waves and/or utilizes radiation pressure to generate mechanical work, each according to the invention. In particular, the apparatus 100 is a photon engine 100 that utilizes radiation provided by a light wave introduced into or manipulated by the apparatus. The inventive photon engine 100 preferably includes a primary prism 106 for receiving the light wave, a secondary prism 107 operatively and collectively associated with the primary prism 106, and a containment chamber 102 (as shown in dash lines in FIG. 1). The primary prism 106 and the secondary prism 108 are situated so as to abut face-to-face (or wall-to-wall) and to form a compression boundary interface 114. As discussed briefly above, the interface 114 may actually include, in one mode, a closeable or compressible air or vacuum gap between the two faces, as further discussed in respect to FIGS. 1a and 1b.

The exemplary photon engine 100 further includes substantially identical pairs of piston housings or cylinders 108, piston assembly 110, and reflective mirrors 112. The containment chamber 102 is defined by the front face of the secondary prism 107, the cylinders 108, and the mirrors 112. The highly reflective mirrors 112 are mounted on a planar surface of the moveable piston 110. The mirrors 112 and piston 112 travel together within the cylinders 108. As will also be described below, the piston assembly 110 may be mechanically connected with a crank shaft assembly and the like.

As is apparent from FIG. 1, movement of the reflective mirrors 112 and piston assembly 110 allows for the volume of the containment chamber 102 to increase or decrease, at least on either side of the secondary prism 107. Preferably, the mirrors 112 will move in unison (as part of a larger piston/crank shaft assembly). Moreover, the compression boundary 114 between the primary prism 106 and secondary prism 107 is controlled by a light switch, also according to the invention. As discussed above, the light switch may be operated by way of a piezoelectric drive mechanism 116 that drives the closing of the air gap (through compression) to allow light to pass into the containment chamber 102. Operation of the drive mechanism 116 determines, therefore, the open and close modes of the light switch 114, in a controlled manner.

The photon engine 100 preferably utilizes quartz material for the primary prism 106 and the secondary prism 107. More specifically, the photon engine 100 provides a compression boundary light switch that operates on two fundamental principals or properties of quartz: the piezoelectric effect and total internal reflection (TIR). The piezoelectric effect occurs when quartz is placed in an electric field. Specifically, quartz expands in the presence of an electric field. The crystalline structure of quartz has three primary axis: X, Y, and Z. By placing an electric field oriented along its X-axis, the quartz will expand or contract based on the direction of the electric field. If the electric field results in a compression along the X-axis, then the quartz will expand along or in the Y-axis. By constraining the quartz along the Y-axis during expansion, stress is generated in the quartz along the Y-axis. This generation of stress and the resulting strain in the Y-axis by an electric field oriented along the X-axis is utilized to compress the two pieces of quartz (*i.e.,* primary prism 106 and secondary prism 107.

FIG. 1a depicts a detailed schematic of the compression boundary interface 114 while in the closed or non-operative mode. In this mode, the back face 106c of the primary prism 106 is spaced from the front face 107c of the secondary prism 107. Given Snell's Law and the incident angle, the index of refraction of both prisms are sufficiently similar (*e.g.,* preferably within about 5% to about 20% of each other) to facilitate operation of the light switch in the open mode. Also, the indices of refraction for both prisms are sufficiently dissimilar from the void (or air space) to facilitate operation of the light switch in the closed mode. As a result, an air gap 170 is provided between the two faces 106c, 107c. In the present description, the compression boundary or interface 114 is used to refer to the air gap 170 and the faces 106c, 107c. FIG. 1A also shows the coordinates or axes X, Y of the quartz or primary prism 106. Typically, the air gap 170 will have a depth of about 2000 nanometers to 50 nanometers, and more preferably, between about 1000 nanometers to 100 nanometers, in the closed or non-operative mode.

FIG. 1b illustrates the compression of the compression boundary 114 upon operation of the piezoelectric drive mechanism 116. The result is that the air gap 170 is compressed to about 100 nanometers to 0 nanometer, upon application or excitation of the electric field. As discussed above, application of the electric field results in contraction along in the X-axis direction, which generates stress in the Y direction (as a result of the quartz material or face 106c being prevented from expanding in the Y direction). Preferably, application of the drive mechanism 116 will be applied to both the primary prism 106 and secondary prism 107, or more specifically, the faces 106c and 107. Preferably, the air gap 170 will be compressed to a depth of about 100 nanometers to about 0 nanometer, and more preferably to a depth of about 50 nanometers to about 0 nanometer.

FIGS. 1a and 1b are also used to indicate the communication of the light wave AA through the primary prism 106 and/or compression boundary 170, according to the invention. In FIG. 1a, the light wave AA impacts the back face 106c at an incident angle of about 45°. Due to the index of refraction provided also by the air gap 170, the light wave AA reflects due to TIR in a direction that is generally 90° to its incident angle. In FIG. 1b, because the air gap 170 is substantially eliminated, and the quartz material of the secondary prism 107 is substantially similar to that of the primary prism 106, the two faces 106c, 107c, function as one single medium. That is, the effect of a different index of refraction (provided by the air gap 170) is eliminated. Accordingly, the light wave AA passes through the face 106c and through the face 107c of the secondary prism 107 without interruption.

Snell's Law describes the effect when radiation, or electric magnetic waves, pass from one media to the other. The resulting angle is a function of the incident angle in the index of refraction for both media. If the result of Snell's Law is an imaginary number, the electromagnetic wave is TIR. The photon engine 100 according to the invention utilizes this phenomenon to contain light waves within the primary prism (as is described in respect to a further embodiment).

By coupling TIR and removal of the TIR boundary through piezoelectric compression, a light switch according to the invention is produced. In the off-mode, with no voltage applied, the light is TIR and remains outside the containment chamber 112. When the voltage is applied, the light switch is said to be in the on-mode and the TIR boundary is removed. This allows the light wave to pass through the compression boundary or interface CC, and into the containment chamber 112. Accordingly, an important step of the inventive method, the light switch is actuated on and than off quickly, so as to capture or contain light.

Preferably, the drive mechanism 116 includes a source of high voltage, low current (near electrostatic) that sends the signal to the piezoelectric quartz or prism 106, 107. Mechanical connections is provided by copper plates, for example, attached to the appropriate faces of the primary and secondary prisms 106, 107. The drive mechanism further includes a field effect transistor for providing switching at a very quick (gigahertz) pulse. Most preferably, the pulse is open for a nanosecond and then off for a millisecond.

FIG. 2 is a schematic of one embodiment of the moveable assembly comprising piston 210 and mirror 212. The assembly is characterized by a mass m (and a particular area) and reflectivity E. In operation, the mirror surface is irradiated by a light flux $p_1$ over a distance d by radiation transmitted through a compression boundary 214 and into secondary prism 207. The radiation pressure p collectively generates a mechanical force that acts on the mirror 212 and piston assembly 210.

Now turning to FIG. 3, there is illustrated an alternative embodiment of a photon engine 300 according to the invention. In the depicted variation, wherein like reference numerals are used to refer to like elements, a primary prism 306 is situated adjacent a secondary prism 307. In particular, a back face 306c of primary prism 306 is spaced from a front face 307c of secondary prism 307, to form a compression boundary interface 314 between the primary prism 306 and the containment chamber 302. The boundary interface 314 provides for an octagonal cross section switch element in this embodiment. In all other aspects of the design and operation, the photon engine 300 is substantially similar to that depicted in FIG. 1. As with the photon engine 100 of FIG. 1, the photon engine 300 includes a pair of cylinders 308, a piston 310 moveably accommodated therein, and a highly reflective mirror 312 mounted on the piston 310.

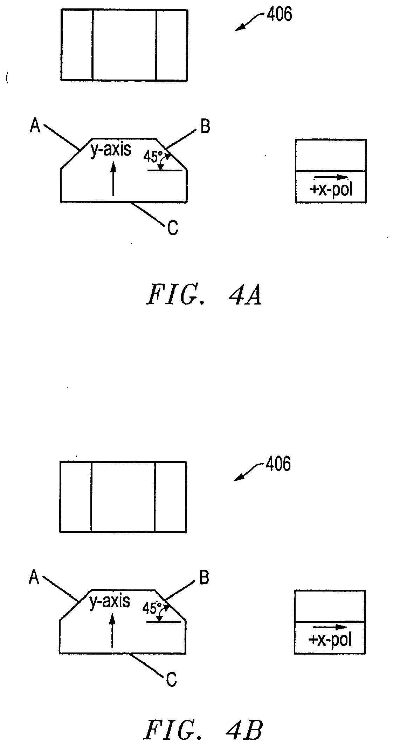

FIGS. 4a and 4b illustrate prisms 406 of various geometric configurations suitable for use as a primary prism in the present invention. The prisms 406 are preferably made of crystalline quartz material with an index of refraction that is greater than 1.45. In practice, it is important to provide for highly polished surfaces through or from which light waves will refract, pass, or reflect. In the prisms 406 of FIG. 4, faces A, B, and C are polished for this purpose.

FIG. 5 depicts a simplified schematic of a system 501 for converting radiant energy into a different form of energy or work, according to the invention. The system 501 utilizes a photon engine 500 as described previously. Furthermore, the system 501 utilizes a primary collective mirror 541 having an inner parabolic surface that may be covered or coated with a 3M™ radiant light film. The system 501 may further include or utilize at least a secondary collector mirror 540 mounted above the primary collector 541 and positioned to reflect light waves reflecting from the inner parabolic surface of the primary collector 541. The secondary collector 540 is characterized by a smaller surface, but may advantageously be covered or coated with 3M™ radiant light film on an outer surface. The system may be further equipped with a light guide 545 for communicating concentrated light from the secondary collector mirror 540 and the primary collector mirror 541 to the photon engine 500. Preferably, the system 501 will include a stand and base assembly 544, and a pointing controller 543 for directing the system 501 towards a radiation source.

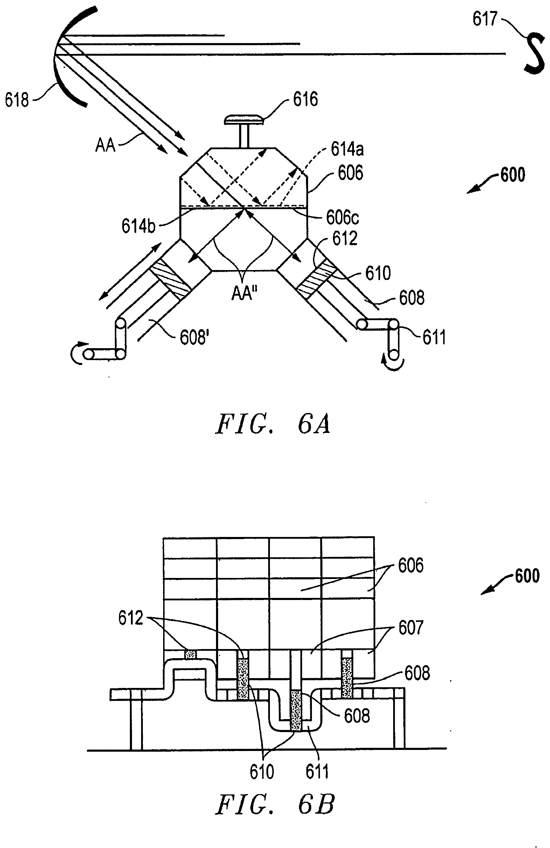

FIGS. 6a and 6b are simplified schematics further illustrating a variation of the inventive photon engine, in particular, a multi-cylinder photon engine 600. These two figures are also illustrative of the operation of the inventive engine 600. FIG. 6a provides a front view of the engine 600, including two cylinders 608, 608' which reciprocate in unison. In the side elevation view of FIG. 6b, the four cylinders 608 on one side of the photon engine 600 are shown. The cylinders 608 accommodate travel of a piston assembly 610 that is operatively connected to crank shaft assembly 611.

Turning to FIG. 6a, the photon engine 600 includes an octagonal shape primary prism 606 positioned adjacent a similarly shaped secondary prism 607, via compression boundary interface 614 formed at least partially by back and front faces 606c, 607c, respectively. The secondary prism 607 communicates with each of cylinders 608, 608' and thus the mirror 612 and piston 610 in each of the cylinders 608, 608'. In the side elevation view of FIG. 6b, four primary prisms 606 and four secondary prisms 607 are shown, each pair being operatively associated with a pair or a bank of cylinders 608 and the piston 610 and crank assemblies 611 situated therein.

Turning to FIG. 6a, the compression boundary interface 614 is operatively driven by a prism piezoelectric drive mechanism 616 to operate the opening or closing of compression boundary light switch (CBLS), as described previously. In FIG. 6a, the interface denoted by 614a is used to show the light switch in the closed position (in dash lines) while reference numeral 614b is used to denote the light switch in the closed position. FIG. 6a further illustrates the source of light waves 617 provided externally of the photon engine 600. The light waves 617 are first captured or concentrated via collector mirror 618 and redirected as instant radiation into the primary prism 606 (see arrows AA). The light waves AA impact the back face 606c at an incident angle of about 45°. If the light switch is in the closed position (denoted by dash line and ref. no. 614a), the light waves AA reflect off the interface 614a (see dash lines) and are redirected through another face of the prism 606 (and exits the primary prism 606).

When the interface 614 is in the open position (denoted by solid line and ref. no. 614b), the light waves AA travels through the interface 614b and enter the containment chamber 602 and impact the back face 606, as shown by arrows AA'. Further, the prisms 606 and 608 are configured such that the light waves AA' enter the containment chamber 608 and are directed straight into the cylinder 608. Thus, the light wave AA' contacts the mirror surface 612 at a preferably generally normal angle and as a result, a relatively high degree of reflectance is achieved. As illustrated, a reflected light wave reflects generally straight back towards the open interface 614b, which is now in a closed position, and impacts the interface at about a 45° angle. Accordingly, the reflected light wave AA' reflects off the closed interface 614b in a direction of the second cylinder 608 of the containment chamber 602. As previously described, the reflected light wave AA' also impacts the second mirror 612 at a generally normal orientation and reflects back at a normal orientation (and at a high degree of reflectance). Accordingly, the light wave AA' reflects along the same path from which it traveled to reach the second mirror 612. In one respect, a predetermined light path is defined by the orientations of the prisms 606, 607, the cylinder 608, 608', among other components. Such a predetermined light path is represented by the bi-directional arrows AA' in FIG. 6.

As also described previously, contact of the light wave AA' on the surface of the mirror 612 generates radiation pressure thereon. This radiation pressure acts to displace the mirror 612 and piston 610 assembly a distance which is denoted by "X" in FIG. 6 (thereby generating work). Moreover, this displacement causes crank shaft assembly 611 to turn thereby generating mechanical energy. In another mode, the drive mechanism 614 may be operated in a frequency modulated mode so that the opening and closing of the light switch allows light to enter the secondary prism 607 on a time scale that is related to the frequency of the radiation inside the secondary prism 607. In this way, the radiation pressure on piston 612 assemblies is reinforced.

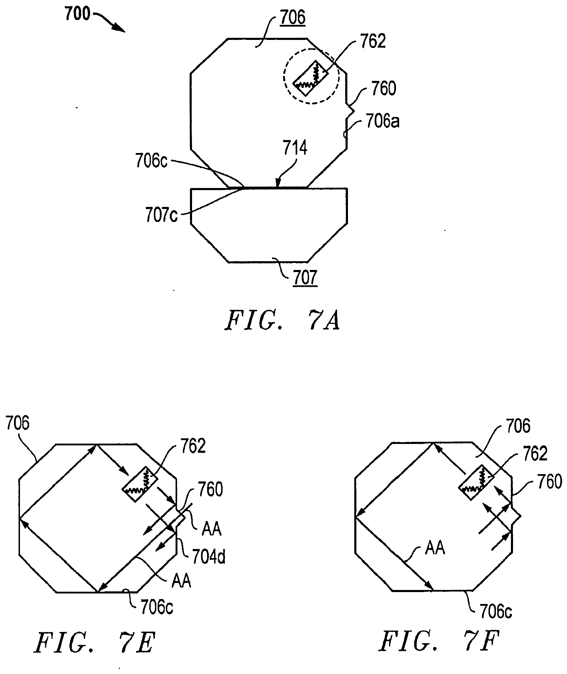

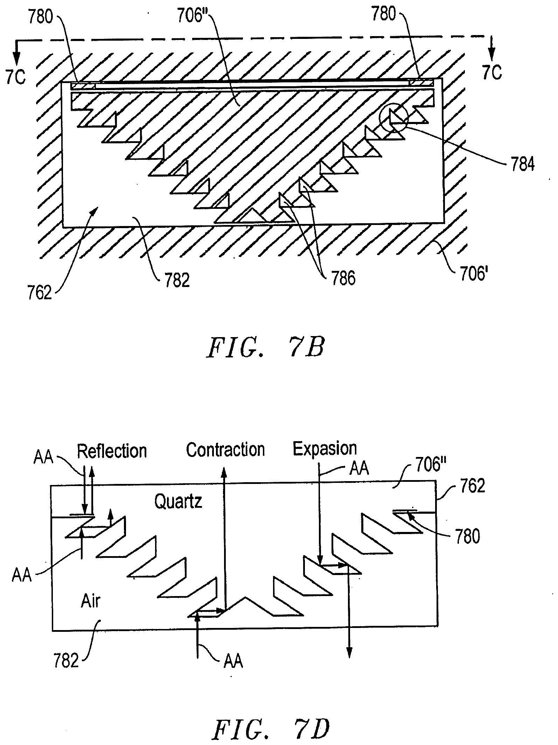

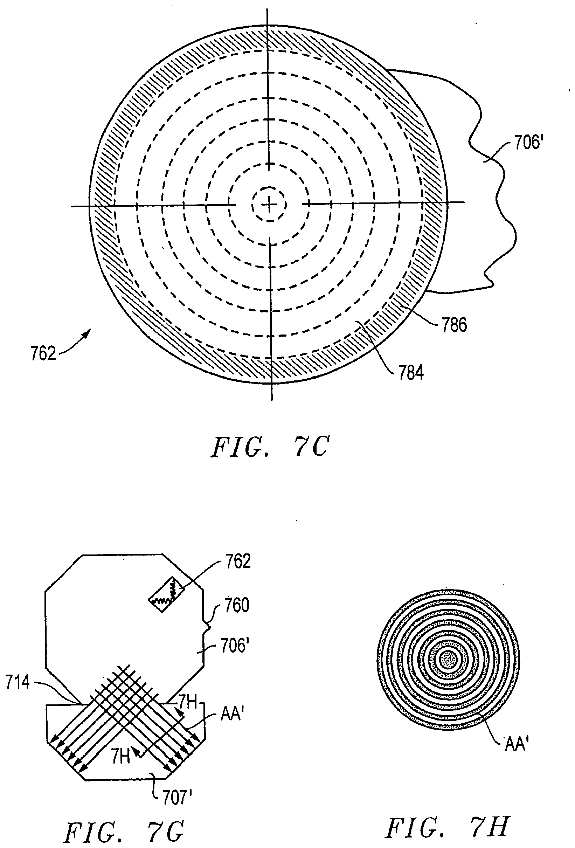

The simplified schematics of FIG. 7 illustrates yet another alternative embodiment of the photon engine according to the invention, wherein like reference numerals are used to indicate like elements. In particular, FIG. 7a depicts an arrangement of a primary prism 706 and a secondary prism 707 that utilizes a light beam expander/contractor 762 embedded in the primary prism 706. Specifically, the light beam expander/contractor 770 functions to split the light beam multiple times and redirect it upon itself, thereby increasing the intensity of the light wave ultimately introduced into the containment chamber 702a.

In the embodiment of FIG. 7, the primary prism 706a has an octagonal shape, and thus, has eight faces or walls 708a - 708h (only some of which are shown). As in previous embodiments, the primary prism 706 is preferably made of a quartz material. The primary prism 706 includes a protrusion 760 extending from the first face 708a, that serves as a beam inlet 760. The beam inlet 760 preferably has a concentrated, circular shape. Further, another face 706c of the primary prism 706 is positioned adjacent to and spaced apart from a front face 707c of the secondary prism 708 to form a compression boundary interface 714. As discussed above, the interface 714 provides for a compression boundary light switch upon operation by the proper drive mechanism, in accordance with the present invention.

Referring to the detailed view of FIG. 7b, in yet another aspect of the invention, the primary prism 706 is equipped with a light beam expander/ contractor 762 positioned internally of the primary prism 706 and embedded in the quartz material 706'. FIGS. 7c and 7d provide further detail illustrations of the expander/contractor 762.

Returning to FIG. 7d, the light expander/contractor 762 is a faceted quartz block embedded in the quartz material 706'. Physically, the light expander/contractor 762 is a carved, circular section of quartz material 706' having concentric air interfaces 786 cut therein. The faceted quartz block 762 is centered on an incoming light beam AA having a given diameter. As shown in FIG. 7b, the quartz block 762 (*i.e.,* the light expander/contractor 762) provides a set of concentric 45° facets of quartz-air interfaces. The cross hatch section illustrates the quartz material 706' of the primary prism 706 as well as the quartz material 706" of the quartz block 762. The remaining non-cross hatch areas are air or vacuum interfaces 782, which are void of the quartz material. More importantly, these air interfaces 782 have optic properties (*i.e.*, index of refraction) different from that of the quartz material. FIG. 7b and the plan view of FIG. 7c, also depict a concentric mirror 780 providing the outer cylinder of the concentric interfaces. As will be explained below, the mirror 780 functions to reflect the outer most diameter concentric cylinder of light during operation, thereby reversing the light path and beginning the process of light contraction.

The schematic of FIG. 7d is provided an illustration of how the inventive light expander/contractor 762 communicates or otherwise manipulates a light beam AA traveling through the primary prism 706. In a first mode of communication, the light beam $AA_E$ reflects upon the 45° quartz-air interface 784. Each incident beam experiences two 90° reflections in the outward direction, thereby converting the diameter of the beam to a larger (expansion) diameter. In the reverse mode, the light beam $AA_C$ again hits the quartz-air interface 784 and experiences again two 90° reflections that converts the diameter to a smaller (contraction) diameter.

The light expander/contractor 762 provides, therefore, three operations: light expansion, light reflection, and light contraction. Light reflection ($AA_L$) occurs once the light beam AA has been expanded to the largest concentric cylinder. This is prompted by reflection off of mirror 780, which reverses the direction of the light $AA_L$. Once the light beam has been completely expanded and contracted, the light switch (compression boundary interface 714) is activated, thereby allowing the containment chamber 702 to be filled in two directions, as shown in FIG. 7g. FIG. 7h illustrates the resulting beam pattern acting on the mirror 710 and piston assembly 712, after the beam flux has been multiplied in the primary prism 706. Once all of the light is injected into the containment chamber 702, the light switch is returned to the closed position so that the resulting beam is contained in the containment chamber 702. The multiplication of the light beam flux from the primary prism 706 results, therefore, in a higher power output.

FIGS. 7e and 7f illustrate general operation of the primary prism 706, while the compression boundary light switch is in the closed or off mode. Collected light beam AA is introduced into the primary prism 706 at a generally normal angle through beam inlet 760. Preferably, the beam inlet 760 is located such that the light beam AA introduced into the primary prism 706 is directed towards the back face 706c and compression boundary interface 714. Initially, the light switch is in the closed or reflective stage. Thus, the light beam AA reflects at a generally normal angle and toward another face 706e of the primary prism 706. The incident angle of this reflected light beam AA is such that the light beam AA will also reflect off the prism face 706e (and subsequent face 706g) at a generally normal angle. Accordingly, as illustrated in FIG. 7e, the light beam AA initially rotates around the primary prism 706 due to total internal reflection.

Preferably, the collected beam AA enters the primary prism 706 and experiences three light reflections before entering the beam expander/contractor 762. The direction at which the light beam AA enters the expander/contractor 762 determines whether the beam AA is expanded or contracted. In FIG. 7e, the light beam AA is shown rotating within the primary prism 706 in the clockwise direction. In this direction, the light beam entrance into the beam expander/contractor 762 results in the light beam AA being expanded. Conversely, the light beam AA may be directed within the primary prism in a counter clockwise direction. As illustrated in FIG. 7f, the light beam AA enters the expander/contractor 762 such that the resulting light beam will be contracted. With each rotation and introduction into the beam expander/contractor, the resulting light beam AA expands or contracts to the next level of concentric cylinders. Expansion is, however, limited by the reflected mirror 780 at the largest level of concentric cylinders. At this point, the direction of the light beam AA is reversed thereby reinitiating the process of contraction.

FIGS. 8-20 are provided to illustrate additional inventive features and/or improvements to the apparatus and/or methods of utilizing radiation and/or communicating a light wave and radiation pressure, as previously described. For purposes of illustration and convenience, the Figures and the invention will be described primarily in the context of a photon engine (such as that previously described in respect to FIGS. 1-7). The invention should not, however, be limited to such a specific and exemplary construction and application of various inventive concepts. It is intended, and shall be apparent to one of relevant skill, that these various concepts may be employed in other constructions and with other applications. Such other constructions and other applications are contemplated by the invention.

For example, it is contemplated that various aspects of the invention apparatus and methods may be employed strictly communications operation, including switching, and in optics-related applications. In specific applications, light intensification, electric generation, and/or use of moveable reflective surfaces may not be relevant. For example, these aspects may not be used in a strictly switching and/or control operation. It is noted that such further applications involve, however, the utilization of radiation pressure in a light wave and/or communicating a light wave (or radiation pressure), according to the present invention.

FIG. 8 is a simplified illustration of an engine 800 for converting radiation pressure conveyed by a light beam(s) into mechanical work (the "Photon Engine"), according to a preferred embodiment of the invention. In this preferred embodiment, the photon engine 800 employs a novel thermal control technique that entails red-shifting a light beam to reduce residual heat. This preferred mode further employs a near total reflective surface (NTRS) for the movable mirror and multiple resonating piezoelectric actuators movably associated with the mirror and positioned in series. In this embodiment, the reflective surface(s) and movable mirror are provided in a movable prism. In a preferred mode, the mechanical work is transferred through the NTRSs, to the movable prism and compressible piezoelectric actuators, before conversion to electric output. Operation of the photon engine preferably involves other critical sub-processes, including light beam collection, light beam multiplication, and light beam containment, which, in most part, have been described herein.

The principles behind operation of certain components or processes of the inventive engine may be explained by the following: a governing work equation; Fresnel equations applied to light switching; a simplistic extinction equation to quantify light as it moves through a region of participating media; and Snell's Law to describe total internal reflection. The governing work equation provides a single equation for calculating the work output of a photon engine. The Fresnel equations show light switching using beyond critical angle tunneling of evanescent waves and may be applied in designing the required switching mechanism for containing light. The participating media provides a measure of light absorption within the quartz. Multiple components of the photon engine rely on the transport of energy though quartz. Snell's law describes light refraction and also when the resulting refraction angle becomes imaginary that light is totally internally reflected (TIR).

The mechanical work generated, *W,* by the engine may be described by the work equation of a piston-mass system [1] that relates momentum transfer, or radiation pressure, between the light beam and a movable mirror surface. The following equation includes an initial velocity of the movable mirrors and shows light beam red-shift is cancelled by light beam lengthening.

$$W = \frac{1}{2} m \left( \left( \frac{p_0 A_m t_0}{m} \left( \frac{1 - (\rho_m \tau_s)^z}{1 - \rho_m \tau_s} \right) + v_0 \right)^2 - v_0^2 \right) \quad (1)$$

where

$p_0$    is initial radiation pressure,
$A_m$    is area of each mirror,
$t_0$    is time duration of initial beam strike,
$m$    is mass of mirror/piston assembly,
$\rho_m$    is effective reflectance of mirrors,
$\tau_s$    is effective transmission of light switch,
$z$    is number of allowed bounces during momentum transfer, and
$v_0$    is initial velocity of the mirrors.

The efficiency of the engine is calculated by dividing the work, shown in (1), by the total energy contained in the initial light beam.

The photon engine 800 may be described as having four major components/phases: light collector/collection 810; light multiplier or intensifier/intensification 820; light converter/conversion 830; and electric generator/generation 840. The simplified diagram of FIG. 8 depicts the four major components and illustrates the exemplary travel of a light wave AA therethrough, along a predetermined path.

The light collector 810 generates, from a large area or distribution of collected light, a smaller, concentrated beam AA. In this light collection phase, the light source is preferably solar input that is captured by a large parabolic collector. The beam is focused to a reverse parabolic mirror, wherein the collected light AA is again collimated into a concentrated beam. This concentrated beam is then directed to the light multiplier 820. The light multiplier 820 manipulates the beam AA to generate a multiplied or intensified beam. During this intensification phase, the collected beam is continuously input from the collector. In another aspect, the light multiplier 820 also allows for synchronization of the light collection phase with the light conversion phase. The result is continuous light processing and engine operation.

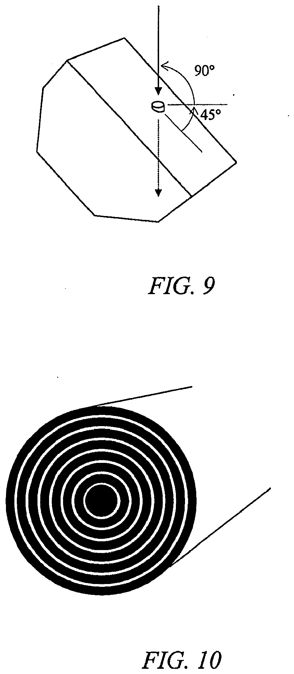

FIG. 9 depicts an inlet having an extended tab to the light multiplier 820. The incident beam is purposefully directed normal to the extended tab, thereby avoiding Brewster's angle which would cause reflections [4]. Hence, the machine is designed to have all incident beams strike quartz along the normal surfaces. This also prevents dispersion, or wave length dependent refraction, which may otherwise cause the light to disperse based on wavelength (rainbow effect). Light that is incident along a surface normal will cause specular reflection. Within the containment chamber, this is acceptable because the light is still reflected.

During the light intensification phase, the collected light beam AA is wrapped around itself, so that the beam AA, when viewed edge on, appears as a set of larger concentric circles, as shown in FIG. 10. This process takes a thin beam, with a relative low energy, and increases the beam energy by widening the beam with each concentric circle. The light path AA continues to make revolutions around the inside of the multiplier 820, with each forward revolution striking the expander and expanding to the next higher diameter concentric circle. When the beam reaches the outer concentric circle, the light AA is incident on a mirror surface and reflected in the reverse direction. The light AA then returns in the same path within the light multiplier 820 except in the reverse direction and with opposite rotation. When the light AA is incident on the light contractor, the beam diameter is reduced with each reverse revolution. The light multiplier 820 produces the most powerful beam when the reverse beam winds back around the multiplier to the initial beam diameter (solid circle). At this point, the collected light beam AA has been converted into a multiplied (intensified) light beam AA hitting the light switch in both directions.

The light conversion phase is initiated by actuating the light switch to change from a totally reflective mode (closed) to a totally transparent mode (opened). As a result, the multiplied beam is injected from the light multiplier 820 into the containment chamber 830. When the light multiplier is completely emptied of the target light beam, the light switch is returned to its totally reflective mode (closed).

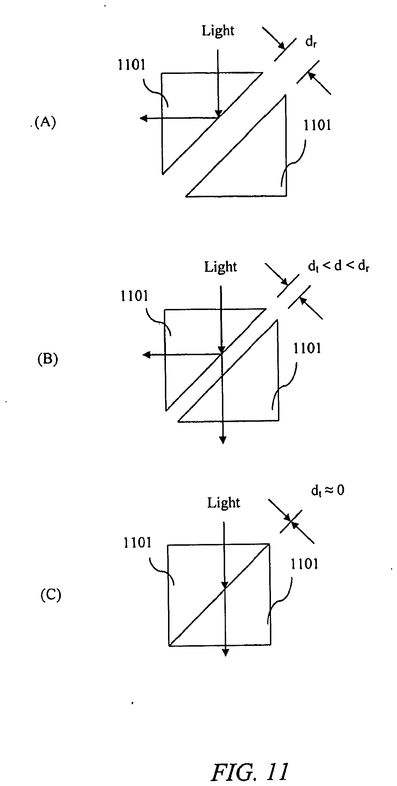

Containing light requires a mechanism to rapidly switch from total reflection to total transmission. One embodiment of this light switch is referred to herein as a compression boundary light switch (CBLS). The switch employs two quartz prisms 1101, as shown in FIG. 11. The quartz prisms 1101 are spaced so that a small distance, $d$, exists between the two prisms 1101. Initially, the distance will be a significantly large, $d_r$, to produce total internal reflection, see FIG. 11A. When the two prisms are brought very close together, so that only a very small distance, $d_t$, exists, the light is totally transmitted, see FIG. 11C. In the interim and while the surfaces are moving together, the light senses the other surface and the light will both be transmitted and reflected, see FIG. 11B. The amount of transmission may be solved as a multiple boundary problem using Fresnel equations [2].

When the space between two quartz prisms 1101 is sufficiently narrow, an evanescent wave stimulates the second surface so that light is transmitted. The amount of transmission is a function of the incident angle, gap index of refraction, quartz prism index of refraction, light wavelength and the polarization of the light.

The total transmission for p-polarization is shown (2).

$$T_p^{tot} = \frac{n_t \cos\theta_t}{n_i \cos\theta_i} \frac{\left|t_p^{i\to m}\right|^2 \left|t_p^{m\to t}\right|^2}{\left|e^{-ik_m d \cos\theta_m} - r_p^{m\to i} r_p^{m\to t} e^{ik_m d \cos\theta_m}\right|^2} \tag{2}$$

The total transmission for s-polarization is shown (3).

$$T_s^{tot} = \frac{n_t \cos\theta_t}{n_i \cos\theta_i} \frac{\left|t_s^{i\to m}\right|^2 \left|t_s^{m\to t}\right|^2}{\left|e^{-ik_m d \cos\theta_m} - r_s^{m\to i} r_s^{m\to t} e^{ik_m d \cos\theta_m}\right|^2} \tag{3}$$

Fresnel coefficients $t_p$, $t_s$, $r_p$ and $r_s$ are direct consequences of Maxwell's equations. The coefficients are shown for p-polarization in (4.1-4.4).

$$t_p^{i\to m} = \frac{2\cos\theta_i \sin\theta_m}{\cos\theta_m \sin\theta_m + \cos\theta_i \sin\theta_i} \tag{4.1}$$

$$t_p^{m\to t} = \frac{2\cos\theta_m \sin\theta_t}{\cos\theta_t \sin\theta_t + \cos\theta_m \sin\theta_m} \tag{4.2}$$

$$r_p^{m\to i} = -\frac{\cos\theta_m \sin\theta_m - \cos\theta_i \sin\theta_i}{\cos\theta_m \sin\theta_m + \cos\theta_i \sin\theta_i} \tag{4.3}$$

$$r_p^{m\to t} = -\frac{\cos\theta_t \sin\theta_t - \cos\theta_m \sin\theta_m}{\cos\theta_t \sin\theta_t + \cos\theta_m \sin\theta_m} \tag{4.4}$$

The coefficients are shown for s-polarization in (5.1-5.4).

$$t_s^{i\to m} = \frac{2\cos\theta_m \sin\theta_i}{\cos\theta_i \sin\theta_m + \cos\theta_m \sin\theta_i} \tag{5.1}$$

$$t_s^{m\to t} = \frac{2\cos\theta_t \sin\theta_m}{\cos\theta_m \sin\theta_t + \cos\theta_t \sin\theta_m} \tag{5.2}$$

$$r_s^{m \to i} = -\frac{\cos\theta_i \sin\theta_m - \cos\theta_m \sin\theta_i}{\cos\theta_m \sin\theta_i + \cos\theta_m \sin\theta_i} \qquad (5.3)$$

$$r_s^{m \to t} = -\frac{\cos\theta_m \sin\theta_t - \cos\theta_t \sin\theta_m}{\cos\theta_m \sin\theta_t + \cos\theta_t \sin\theta_m} \qquad (5.4)$$

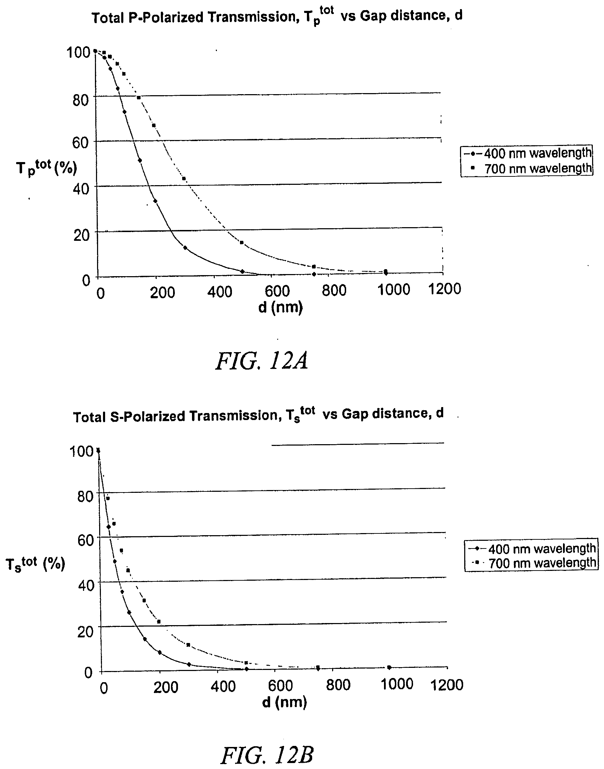

Total p-polarized transmission is solved as function of gap distance and wavelength (6) and the results are plotted on FIG. 12A.

$$T_p^{tot} = \frac{3.686}{e^{4.443\frac{d}{\lambda}} + e^{-4.443\frac{d}{\lambda}} + 1.686} \qquad (6)$$

Total s-polarized transmission is solved as function of gap distance and wavelength (7) and the results are plotted in FIG. 12B.

$$T_s^{tot} = \frac{1.437}{e^{4.443\frac{d}{\lambda}} - e^{-4.443\frac{d}{\lambda}} - 0.5604} \qquad (7)$$

The total transmission and total reflection states occur at $d_t$ = 0 nm and $d_r$ > 1000 nm, respectively, for the visible spectrum of light (400 nm - 700 nm). This provides a minimum operating criterion for a CBLS and indicates that the total transmission state, without perfectly flat surfaces, requires that the quartz prisms be compressed together.

In the light conversion phase, the light containment chamber receives and contains the intensified light beam and facilitates the harnessing of the radiation pressure provided by the light beam. The multiplied contained beam is directed on two near total reflection surfaces (NTRS). The containment chamber functions to effect continuous reflections of the contained light beam on the NTRS, until energy embodied in the light beam is depleted.

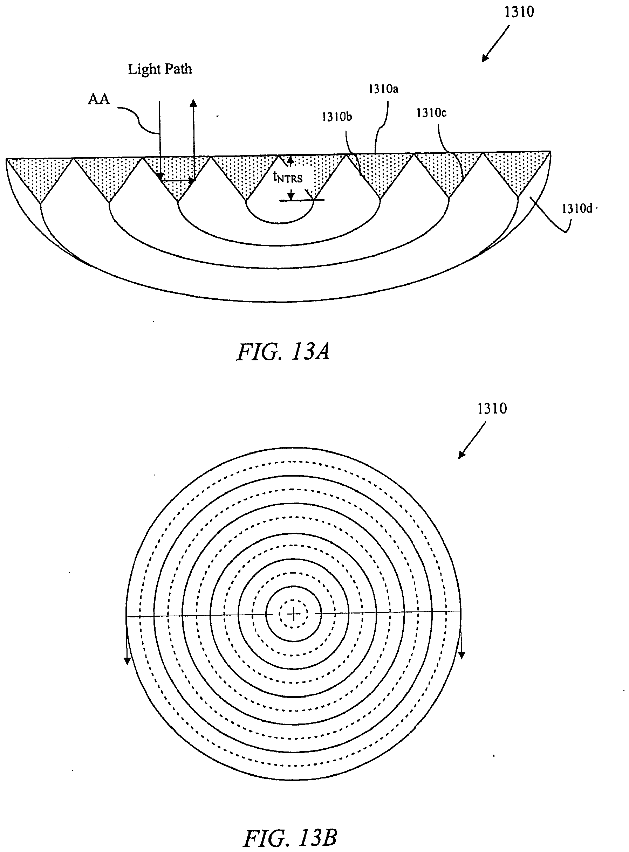

In this embodiment, the movable mirror and the reflective surface(s) are provided by a movable quartz prism 1310. FIG. 13A provides a plan view of the prism 1310 depicting a transparent front face or surface 1310a and two angled, reflective faces or surfaces 13b, 13c positioned within the prism body 1310d. The cross-sectional view of FIG. 13B reveals, in better detail, the relative positions of the reflective surfaces 1310b, 1310c and the angular V-shape these surfaces 1310a, 310b form. According to the invention and as shown in the plan view of FIG. 13A, the top and bottom circular edges of the reflective surfaces 1310b, 1310c outline a series of concentric circles below the front surface 310a of the prism 1310. The view of FIG. 13B also indicates the directed, predetermined path of a light beam AA toward the initial reflective surface 1310b, from the initial reflective surface 1310b to the return reflective surface 1310c, and from the return reflective surface 1310c, through the front surface and in a direction away from the prism 1310. As will be described in more detail the below, the faces 1310a, 1310b, and 1310c are relatively positioned such that the light beam AA impacts or passes through the front face 1310a at about 90 degrees, each of the back faces 1310b, 1310c at about 45 degrees, and, again, the front face at about 90 degrees. As a result, the light beam AA passes through the transparent front face 1310a and reflects off each of the two back faces 1310b, 1310c as desired. In this regard, the prism 1310, including its surfaces or faces 1310a, 310b, 1310c, is referred to as a near total reflective surface (NTRS). As further explained below, operation of the movable prism 1310 and NTRS, in conjunction with a series of piezoelectric actuators operably associated therewith, provides an advantageous thermal control technique.

A near total reflective surface (NTRS), as employed herein, utilizes total internal reflection to eliminate losses from repeated reflections, even though participating media causes energy absorption and red-shift causes energy dissipation. The NTRS provides, therefore, an effective mirror surface that significantly outperforms commercially available mirrors.

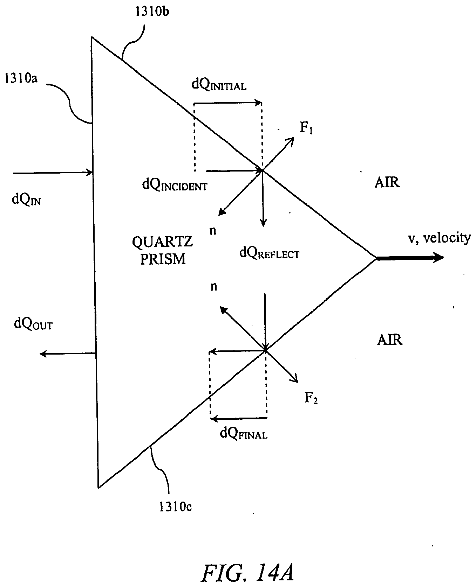

To explain the principles that allow for this improved performance, reference is now made to FIG. 14. FIG. 14 provides an illustration of the travel of the light beam AA in the NTRS, as represented by an energy packet. An initial energy packet, $dQ_{INITIAL}$, is incident on a surface with a velocity, v, moving directly away. The velocity vector is directly aligned with this initial energy packet direction vector. The resulting incident energy, $dQ_{INCIDENT}$, is reduced by red-shift, a function of the speed of light, $c$ as (8).

$$dQ_{INCIDENT} = dQ_{INITIAL}\left(\frac{c-v}{c}\right) \qquad (8)$$

Snell's law [4] describes light refraction so that when the resulting refraction angle becomes imaginary the light is totally internally reflected. The reflected energy, $dQ_{REFLECT}$, is equal to the incident energy as (9)

$$dQ_{REFLECT} = dQ_{INCIDENT} \qquad (9)$$

Since the reflected energy contacts the other side of the prism at a right angle to the velocity vector there is no red-shift, hence $dQ_{FINAL}$, is equal to the reflected energy as (10)

$$dQ_{REFLECT} = dQ_{FINAL} \qquad (10)$$

Although the incident energy is less with a higher velocity, the resulting force is nearly the same. The work output from two equal forces, one against a lower surface velocity and the other against a higher surface velocity is not the same. The higher surface velocity will produce a higher work output, as shown in Eq. (1), because the final velocity (first square term) is referenced from the initial velocity (second square term). If red-shift approaches the reflectivity of the mirror, by moving the mirror surface fast enough, the contained energy will be dissipated through red-shifting, thereby lowering the residual heat. Stacked piezoelectric actuators in resonance provide a mechanism for efficiently converting mechanical work into electricity and obtaining a high NTRS velocity for red-shifting [5]. In addition to effecting conversion of radiation pressure into mechanical work, the combination of the NTRS and the actuators, as taught herein, serves as a technical solution to the potential technical problem of thermal control.

Participating media effects radiation exchange through a volume. The media (or medium) through which the radiation travels can cause attenuation. For simple materials, such as a gas at radiative equilibrium, the dependence on wavelength can be ignored. This is also possible for solids such as quartz. This simplification allows the use of a simple absorption coefficient [3].

The initial energy packet, $dQ_{INITIAL}$, enters the region where it can interact, or refract as shown, where it encounters the participating media. As the energy packet travels through the participating media it losses media as that is absorbed, $dQ_{ABSORBED}$, by the media. As the energy packet exits the media, the transmitted energy, $dQ_{TRANSMITTED}$, can again interact, or refract as shown, with the participating media.

An energy balance can be written for the energy packets as (11).

$$dQ_{INITIAL} = dQ_{ABSORBED} + dQ_{TRANSMITTED} \qquad (11)$$

The transmitted energy left after absorption is calculated using the absorption coefficient as (12)

$$dQ_{TRANSMITTED} = dQ_{INITIAL} e^{-at} \qquad (12)$$

The absorbed energy can be calculated as (13)

$$dQ_{ABSORBED} = dQ_{INITIAL}\left(1 - e^{-at}\right) \qquad (13)$$

The NTRS effective reflectance, $\rho_{NTRS}$, can be calculated as (14)

$$\rho_{NTRS} = \frac{dQ_{OUT}}{dQ_{IN}} = \rho_{QUARTZ} e^{-at}\left(\frac{c-v}{c}\right) \qquad (14)$$

Note that scattering is assumed to be negligible and negative absorption is not considered in this case [3]. The quartz surface reflectance, $\rho_{QUARTZ}$, is included in $dQ_{OUT}$ contains the energy reflected when $dQ_{IN}$ enters the quartz media.

The electric generation phase occurs simultaneously with the light converter phase. The stacked resonating piezoelectric actuators are attached directly to the NTRSs. For the duration of the light convert phase, the actuators are contracting providing the necessary thermal control benefit of red-shifting the contained light by moving the NTRS faces away from the incident beam at a high velocity. The additional electric current from the force applied by the light through the NTRSs to the piezoelectric actuators is then collected using an H-Bridge (or similar) circuit. It should be noted that employment of piezoelectric actuators as an energy transmission components is generally known. Its integration herein shall be apparent to one skilled in the art provided the present disclosure.

Applicant now provides a system and method of modeling for the engine. Five temporal ray tracing capabilities are provided:

(1) force accumulation from radiation pressure exerted by reflections.
(2) variable optics to model containment using light switching,
(3) enclosures to model flux delta from beam multiplying and splitting,
(4) loss of energy from redshift,
(5) energy absorption within participating media,

The first capability provides a calculation of radiation pressure (or radiation force) that includes forces from reflected energy, in addition to radiation pressure from only a direct heating component to a node. Radiation pressure from reflected energy is the most fundamental concept of modeling an operational photon engine by modeling internal momentum transfer from photons to a movable piston during multiple reflections.

The second capability is light containment by time varying optical properties. This capability is required to extend the simulation of a photon engine to include multiplication of a light beam. This is accomplished by modeling a surface that begins as highly reflective, then after a finite amount of time instantly changing the optical properties to allow transmission. After a subsequent finite amount of time, the surface is instantly changed back to highly reflective. Unlike the first case capability, having time dependent properties allows for the multiplication of the beam power as shown in the third case.

The third capability is flux change when switching between enclosures. This capability calculates the flux change in a source (or flux delta) when a long lower flux beam is wrapped around itself then split by variable optics switch to produce a shorter higher flux beam. This process effectively compresses the beam length, and since the total energy remains the same, the result is a higher flux beam.

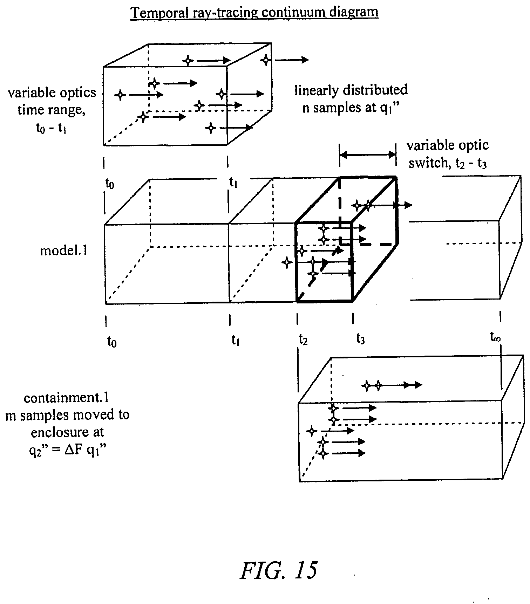

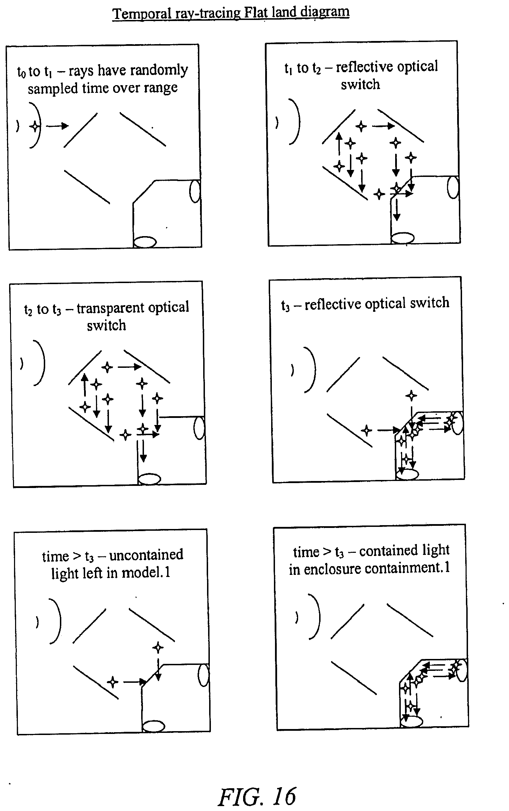

FIGS. 15 and 16 provide a continuum view of temporal ray-tracing and Flat land (i.e. timesheet) view of temporal ray-tracing.

The flux delta, $\Delta F$, is calculated by taking into account the number of sample rays, n, the number of contained rays, m, and the different sample times, initial sample range, $t_0$ to $t_1$, and variable optics switch range, $t_2$ to $t_3$ as (15)

$$\Delta F = \frac{m}{n} \frac{\left(t_1 - t_0\right)}{\left(t_3 - t_2\right)} \qquad (15)$$

The flux delta can be used to determine the containment chamber flux, $q''_2$, of the multiplied beam from the model. 1 flux, $q''_1$, as (16)

$$q''_2 = \Delta F q''_1 \qquad (16)$$

The fourth capability is the loss of energy in beam strength due to red shift. In a machine with momentum transfer to a movable piston, the movement of the piston away from the incident beam will cause red shifting of the reflected energy. This can be modeled by simply reducing the reflected ray energy based on the velocity the surface moves during the reflection.

The fifth capability is the loss of energy from absorption by participating media. This phenomenon occurs when light is transmitted through a solid such as quartz. The light path inside a photon engine requires many interactions with quartz. The interaction inside the light multiplier will result in rays traveling long distances inside quartz. The longer a ray travels inside quartz the more energy lost to absorption. This results in lower transmission and heating of the participating media. The most desirable operation of a photon engine is to have the lowest absorption (highest transmission) so the energy is available for momentum transfer.

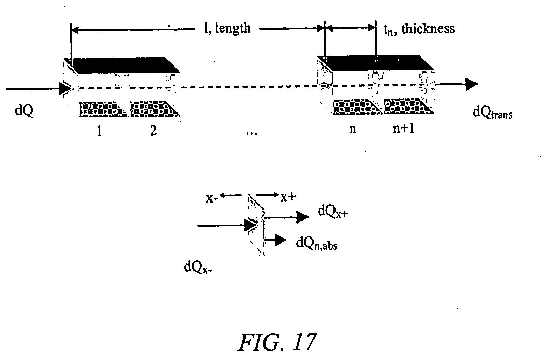

FIG. 17 illustrates a control volume approach to modeling participating media. Instead of representing the participating media region as a continuous volume, meshing the region into smaller control volumes allows the absorption to be quantified discretely as it moves through a region. As shown in Figure 15, an energy balance on the interface between two control volumes provides the internal heating, $dQ_{n,abs}$, and the energy entering the subsequent control volume, $dQ_{x+}$, as (17.1-17.2)

$$dQ_{x-} = dQ_{x+} + dQ_{n,abs} \qquad (17.1)$$

$$dQ_{n,abs} = dQ_{x+} \left( e^{-\alpha(l+t_n)} - e^{-\alpha l} \right) \qquad (17.2)$$

An analysis was performed combining each of the temporal ray tracing capabilities into a single simulation that accurately simulates an exemplary working engine. Care must be taken to avoid aberrations when modeling light as a ray. This distortion occurs when light is focused to a point. The engine design has avoiding aberrations. Brewster's angle is also avoided by always totally internally reflecting and transitioning from one media to another along surfaces normal without any angle of incidence.

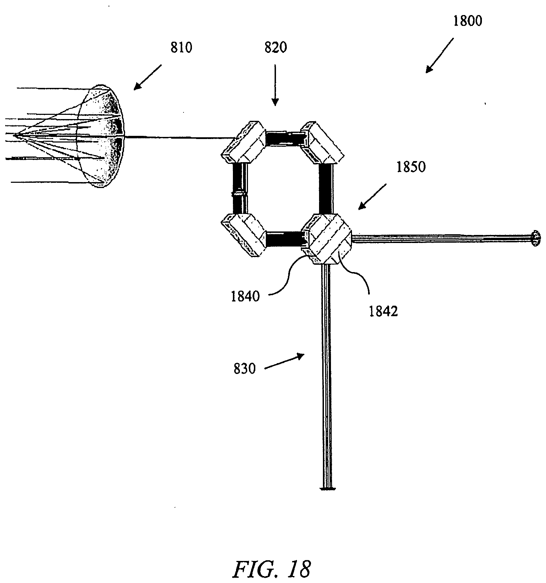

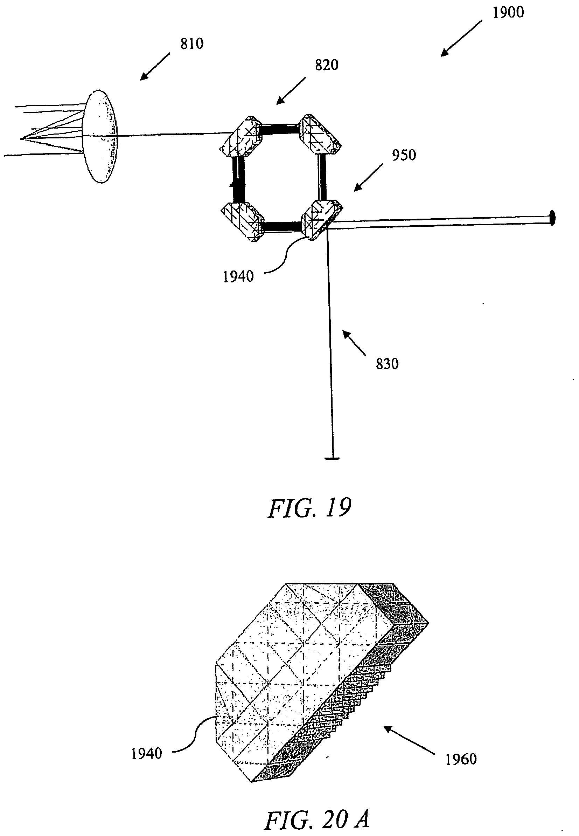

FIG. 18 illustrates an exemplary photon engine 1800, including the light ray or beam paths for the engine 1800. The engine employs a switch 1850 as previously described (with two adjacent prisms 1840, 1842). FIG. 19 depicts an alternative engine 1900 and associated ray paths. The engine 1900 employs a single prism for a light switch 1950. Whereas a second prism (*e.g.,* 1942) previously provided a portion of the containment chamber, a linear switch surface or simply linear switch 1950 now provides the second half of the compression boundary switch.

The linear switch 1960 effectively reduces the distance a light beam travels through quartz material of the secondary prism (relative to the design of FIG. 18 and earlier described designs). This alternative design is similar to that of the NTRS, in that it uses triangular conic sections 1960a. The switch 1960 is comprised of a series of linear triangular prisms 1960a. Light enters normal to one of the faces and totally internally reflects (TIR) when the light switch is reflective. When the light switch is transparent, the flat surface of the linear switch is compressed against the primary prism 1940. This design may be extended to any prism in the engine to reduce the amount of attenuation due to the quartz participating media.

A simulation tool was used to synthesize the design by augmenting the CBLS to have a linear triangular prism design (linear switch) that is similar to the NTRS design. Using a spreadsheet, the efficiency of each design has been estimated using the number of reflections inside the containment chamber per ray, estimate of $\rho_{NTRS}$ and $\tau_{SWITCH}$, and lowest quartz absorption coefficient, $\alpha$. As reflected in Table 1, the use of a linear switch achieves a significantly higher efficiency. In doing so, yet another technical solution (linear switch) is implemented to solve a technical problem or challenge (efficiency, and economy in size and manufacturing).

Table 1 - Efficiency results for two Photon Engine optical switch designs.

| | # of bounces per ray, z | $\rho_{NTRS}$ | $\tau_{SWITCH}$ | $\alpha$-QUARTZ (cm$^{-1}$) | Efficiency (%) |
|---|---|---|---|---|---|
| Standard CBLS Switch | 10469 | 0.99999 | 0.9999 | $1 \times 10^{-5}$ | 2.07 |
| Linear Switch | 136534 | 0.99999 | 0.99999 | $1 \times 10^{-5}$ | 15.59 |

It should be understood, however, that various arrangements and deployments of the components of inventive apparatus in accordance with the invention may be made and will vary according to the particular environment and applications. However, in any such applications, various aspects of the inventions will be applicable, as described above. For example, various aspects of the apparatus described herein, such as the containment chamber design, the optical switching devices, and the light multiplier or light wave intensifier may be incorporated with other mechanical devices, including other engines. As a further example, the piston and cylinder assembly may be replaced by another energy system such as an energy storage device (e.g., a spring device). Furthermore, various aspects of the described invention may be employed in other applications without the other components. For example, a combination of the light switch and NTRS mirror (moveable or non-moveable) may be employed in a switching, communicative, or control operation (independent of a photon engine, engine components, or other components described herein). Other examples include employment of the light intensifier or multiplier and/or light switch in similar switching, communicative, or controls applications.

The foregoing description of the present invention has been presented for purposes of illustration and description. It is to be noted that the description is not intended to limit invention to the apparatus, and method disclosed herein. Various aspects of the invention as described above may be applicable to other types of engines and mechanical work devices and methods for communicating radiation pressure. It is to be noted also that the invention is embodied in the method described, the apparatus utilized in the methods, and in the related components and subsystems. These variations of the invention will become apparent to one skilled in the optics, engine art, or other relevant art, provided with the present disclosure. Consequently, variations and modifications commensurate with the above teachings and the skill and knowledge of the relevant art are within the scope of the present invention. The embodiments described and illustrated herein are further intended to explain the best modes for practicing the invention, and to enable others skilled in the art to utilize the invention and other embodiments and with various modifications required by the particular applications or uses of the present invention.

**Claims**

1. A method of producing a power output from a light beam, the method comprising:

   providing a primary prism (1101) having a light beam inlet, the primary prism comprising a first transparent optical medium of polished crystalline quartz having a given index of refraction, the primary prism comprising multiple total internal reflecting surfaces;

   producing a processed light beam by directing an initial light beam along the initial light path and into a given facet of a light expander/contractor device (820) communicating with the primary prism, the light expander/contractor device expanding light beams that enter the light expander/contractor device from a given direction, producing an exiting light beam;

   reflecting the exiting light beam from a total internal reflecting surface of the primary prism to a next total internal reflecting surface of the primary prism until the exiting light beam reenters the light expander/contractor device from the same direction as the initial light beam but at a different facet, thereby repeatedly rotating the exiting light beam within the primary prism and producing the processed light beam;

   selectively operating an optic switch comprising a secondary prism, by controlling the compression boundary between the primary prism and the secondary prism so as to control communication of the processed light beam between the primary prism and a containment chamber (830) that includes the secondary prism (1101);

   containing and repeatedly propagating the processed light beam along a predetermined light path in the containment chamber producing a propagated processed light beam, the predetermined light path comprising one or more moving reflective prisms (1310) comprising a near total reflective surface (NTRS) comprising a transparent front surface and multiple NTRS prisms, each NTRS prism comprising an initial transparent surface (1310a) defined by at least a portion of the transparent front surface of the NTRS, a first reflective surface (1310b) extending at a first angle relative to the initial transparent surface to communicate at a second angle with a second reflective surface (1310c) extending at a third angle relative to the initial transparent surface, the multiple NTRS prisms being arranged coaxially and concentrically adjacent to one another on the transparent front, the predetermined light path passing through the initial transparent surfaces of the NTRS prisms, and the NTRS prisms being adapted to totally internally reflect the light beam;

   communicating the power output of the propagated processed light beam to an energy system communicating with the one or more moving reflective prisms, wherein the processed light beams repeatedly impact the one or more moving reflective prisms.

2. The method of claim 1, wherein:

   the first angle is 45°;
   the second angle is 45°; and,
   the third angle is 45°.

3. The method of claim 1 or 2, wherein selectively operating the optic switch comprises changing the optic switch between modes selected from the group consisting of an open mode and a closed mode.

4. The method of any one of claims 1 to 3, comprising providing a secondary prism comprising a second transparent optical medium having a second index of refraction, the optic switch comprising a primary face of the primary prism opposing a secondary face of the secondary prism.

5. The method of any one of claims 1 to 4, wherein selectively operating the optic switch comprises compressing the secondary face of the secondary prism relative to the primary face of the primary prism to form a transparent interface therebetween.

6. The method of claim 4 or 5 wherein selectively operating the optic switch comprises decompressing the secondary face of the secondary prism relative to the primary face of the primary prism.

7. The method of any one of claims 1 to 6, wherein selectively operating the optic switch splits the processed light beam into multiple processed light beams.

8. The method of any one of claims 1 to 7, wherein selectively operating the optic switch minimizes communication of the multiple processed light beams from the containment chamber.

9. The method of any one of claims 1 to 8, further comprising:

reversing the direction of light, thereby redirecting the light upon itself and producing a fully processed light beam; and,
selectively operating the optic switch to communicate the fully processed light beam between the primary prism and the containment chamber, thereby producing multiple fully processed light beams;
containing and repeatedly propagating the multiple fully processed light beams in the containment chamber along the predetermined reflective light path, producing a power output;
communicating the output to the energy system.

10. The method of any one of claims 1 to 9, further comprising moving the one or more reflective prisms at a velocity sufficiently high to red-shift the processed light beams.

11. The method of claim 10 wherein the red-shift is effective to reduce residual heat.

12. The method of any one of claims 1 to 11, wherein the energy system is a crank shaft assembly and the amount of energy transferred to the energy system causes the crank shaft assembly to reciprocate.

13. The method of any one of claims 1 to 12, further comprising:

converting the power output to electric output; and,
collecting the electric output.

14. The method of claim 13 comprising collecting the electric output using an H-Bridge circuit.

15. The method of any one of claims 1 to 14, wherein the method further comprising providing as a face selected from the group consisting of the primary face, the secondary face, and a combination thereof, a linear switch comprising a series of linear triangular prisms effective to substantially totally reflect the processed light beams.

16. The method of any one of claims 1 to 15, further comprising improving containment of light in the containment chamber by rapidly switching between compressing the primary face to a distance of 0 nm from the secondary face, and rapidly decompressing the primary face to a distance of greater than 1000 nm from the secondary face.

17. The method of any one of claims 1 to 16, wherein:

the one or more reflective prisms have an initial velocity ($v_0$); and,
a greater amount of work is generated by the energy system at a greater initial velocity.

18. The method of any one of claims 1 to 17, wherein the amount of energy transferred to the energy system generates an amount of work (W) calculated according to the following equation:

$$W = \frac{1}{2}m\left(\left(\frac{p_0 A_m t_0}{m}\left(\frac{1-(\rho_m \tau_s)^z}{1-\rho_m \tau_s}\right)+v_0\right)^2 - v_0^{\,2}\right) \qquad (1)$$

wherein:

$p_0$ is an initial radiation pressure on a reflective prism impacted by the processed light beams;
$A_m$ is an area of the reflective prism impacted by the processed light beams;
$t_0$ is an initial time duration of impact of the processed light beams on the reflective prism;

$m$ is a mass of the reflective prism and the energy system;

$\rho_m$ is an effective reflectance of the processed light beams by the reflective prism;

$\tau_s$ is an effective transmission of the processed light beam through the optic switch;

$z$ is a number of repeated impacts of the processed light beams against the reflective prism; and,

$v_0$ is an initial velocity of the reflective prism impacted by the processed light beams.

**19.** The method of any one of claims 1 to 18, further comprising:

collecting and concentrating light using one or more collective mirrors to produce a concentrated light beam;

directing the concentrated light beam along the initial light path and through the light expander/contractor device, thereby producing a fully processed concentrated light beam;

selectively operating the optic switch controlling communication of the fully processed concentrated light beam between the primary prism and the containment chamber, thereby splitting the fully processed concentrated light beam and producing multiple fully processed concentrated light beams;

containing and repeatedly propagating the multiple processed concentrated light beams along the predetermined light path in the containment chamber, producing a power output;

communicating the power output to the energy system.

**20.** The method of claim any one of claims 1 to 19, further comprising:

directing the processed light beams at an initial angle to the initial transparent surface;

reflecting a first portion of the processed light beams from the initial transparent surface to produce a first reflecting;

passing a second portion of the processed light beams through the initial reflective surface, through a first part of the NTRS prism at a first angle to the first reflective surface, the first part of the NTRS prism absorbing a first quantity of energy and producing a first remainder of the light beams;

totally internally reflecting the first remainder of the processed light beams at a second angle relative to the first reflective surface through a second part of the NTRS prism, the second part of the NTRS prism absorbing a second quantity of energy and producing a second remainder of the processed light beams; and

totally internally reflecting the second remainder of the processed light beams at a third angle relative to the second reflective surface and through a third part of the NTRS prism, the third part of the NTRS prism absorbing a third quantity of energy and producing a third remainder of the processed light beams;

passing the third remainder of the processed light beams through the initial transparent surface at a final angle to produce a second reflecting;

wherein the combination of the first reflecting and the second reflecting substantially totally reflects the processed light beams.

**21.** The method of claim 20, wherein:

the initial angle is 90°;

the first angle is 45°;

the second angle is 45°;

the third angle is 45°; and,

the final angle is 90°.

**22.** A photon engine (800) comprising one or more cylinders comprising:

a primary prism (1101) having a light beam inlet and comprising multiple total internal reflecting faces comprising a primary face, the primary prism comprising polished crystalline quartz having a given index of refraction;

a light expander/contractor device (820) communicating with the light beam inlet, the light expander/contractor device comprising facets adapted to produce a processed light beam by expanding the diameter of a light beam entering from a given direction;

a containment chamber (830) comprising a predetermined reflective light path comprising one or more movable reflective prisms arranged to communicate power output with an energy system, the containment chamber also including a secondary prism (1101);

an optic switch adapted to control the compression boundary between the primary prism and the secondary prism;

the one or more movable reflective prisms (1310) comprising a near total reflective surface (NTRS) comprising a transparent front surface and multiple NTRS prisms, each NTRS prism comprising an initial transparent surface (1310a) defined by at least a portion of the transparent front surface of the NTRS, a first reflective surface (1310b) extending at a first angle relative to the initial transparent surface to communicate at a second angle with a second reflective surface (1310c) extending at a third angle relative to the initial transparent surface, the NTRS prisms being arranged coaxially and concentrically adjacent to one another on the transparent front surface and being adapted to totally internally reflect the light beam.

23. The photon engine of claim 22 wherein:

the first angle is 45°;
the second angle is 45°; and,
the third angle is 45°.

24. The photon engine of claim 22 or 23, the optic switch being adapted to split the processed light beam multiple times to produce multiple processed light beams.

25. The photon engine of any one of claims 22 to 24, being further adapted to reverse the direction of the light beam.

26. The photon engine of any one of claims 22 to 25, wherein a face selected from the group consisting of the primary face, the secondary face, and a combination thereof comprises a linear switch comprising multiple triangular prisms extending from the face, each multiple triangular prism comprising a first transparent face extending at a first angle relative to the face communicating at a second angle with a second transparent face extending at a third angle relative to the face, the linear switch being effective to totally internally reflect light.

27. The photon engine of claim 26, wherein:

the first angle is 45°;
the second angle is 90°; and,
the third angle is 45°.

28. The photon engine of any one of claims 22 to 27, wherein the energy system is a piston and a crank shaft assembly.

29. The photon engine of any one of claims 22 to 27, wherein the energy system is a spring device.

30. The photon engine of any one of claims 22 to 29, comprising multiple cylinders.

31. The photon engine of any one of claims 22 to 30, wherein the one or more reflective prisms are operatively associated with an H-Bridge circuit effective to collect electric output.

**Patentansprüche**

1. Verfahren des Erzeugens einer Leistungsausgabe von einem Lichtstrahl, das Verfahren umfassend:

Bereitstellen eines primären Prismas (1101) mit einem Lichtstrahleinlass, wobei das primäre Prisma ein erstes transparentes optisches Medium aus poliertem kristallinem Quarz mit einem vorgegebenen Brechungsindex umfasst, wobei das primäre Prisma mehrfache interne totalreflektierende Oberflächen umfasst;
Erzeugen eines verarbeiteten Lichtstrahls durch Leiten eines anfänglichen Lichtstrahls entlang des anfänglichen Lichtpfads und in einen vorgegebenen Aspekt einer Lichtexpander-/Lichtkontraktions-Vorrichtung (820), die mit dem primären Prisma kommuniziert, wobei die Lichtexpander-/Lichtkontraktions-Vorrichtung die Lichtstrahlen erweitert, die in die Lichtexpander-/Lichtkontraktions-Vorrichtung aus einer vorgegebenen Richtung eintreten, was einen austretenden Lichtstrahl erzeugt;
Reflektieren des austretenden Lichtstrahls von einer internen totalreflektierenden Oberfläche des primären Prismas auf eine nächste interne totalreflektierende Oberfläche des primären Prismas bis der austretende Lichtstrahl erneut in die Lichtexpander-/Lichtkontraktions-Vorrichtung aus derselben Richtung wie der anfängliche Lichtstrahl, jedoch in einem anderen Aspekt eintritt, wodurch der austretende Lichtstrahl innerhalb des primären Prismas wiederholt gedreht wird und der verarbeitete Lichtstrahl erzeugt wird;
selektiver Betrieb eines optischen Schalters, umfassend ein sekundäres Prisma, durch das Steuern der Kompressionsgrenze zwischen dem primären Prisma und dem sekundären Prisma, um die Kommunikation des verarbeiteten Lichtstrahls zwischen dem primären Prisma und einer Aufnahmekammer (830), die das sekundäre Prisma (1101) umfasst, zu steuern;

Aufnehmen und wiederholtes Verbreiten des verarbeiteten Lichtstrahls entlang eines festgelegten Lichtpfads in der Aufnahmekammer, was einen verbreiteten verarbeiteten Lichtstrahl erzeugt, wobei der festgelegte Lichtpfad ein oder mehrere sich bewegende reflektierende Prismen (1310) umfasst, umfassend eine nahezu totalreflektierende Oberfläche (NTRS), umfassend eine transparenten Vorderfläche und mehrfache NTRS-Prismen, wobei jedes NTRS-Prisma eine anfängliche transparente Oberfläche (1310a) umfasst, die durch mindestens einen Abschnitt der transparenten Vorderfläche der NTRS definiert wird, wobei sich eine erste reflektierende Oberfläche (1310b) in einem ersten Winkel relativ zur anfänglichen transparenten Oberfläche erstreckt, um in einem zweiten Winkel mit einer zweiten reflektierenden Oberfläche (1310c) zu kommunizieren, die sich in einem dritten Winkel relativ zur anfänglichen transparenten Oberfläche erstreckt, wobei die mehrfachen NTRS-Prismen koaxial und konzentrisch nebeneinander auf der transparenten Vorderfläche angeordnet sind, wobei der festgelegte Lichtpfad durch die anfänglichen transparenten Oberflächen der NTRS-Prismen verläuft und wobei die NTRS-Prismen angepasst sind, um den Lichtstrahl intern totalzureflektieren;

Kommunizieren der Leistungsausgabe des verbreiteten Lichtstrahls an ein Energiesystem, das mit dem einen oder den mehreren sich bewegenden reflektierenden Prismen kommuniziert, wobei die verarbeiteten Lichtstrahlen wiederholt auf den einen oder die mehreren sich bewegenden reflektierenden Prismen auftreffen.

2. Verfahren nach Anspruch 1, wobei:

   der erste Winkel 45° ist;
   der zweite Winkel 45° ist; und
   der dritte Winkel 45° ist.

3. Verfahren nach Anspruch 1 oder 2, wobei der selektive Betrieb des optischen Schalters das Umschalten des optischen Schalters zwischen Betriebsarten umfasst, die aus der Gruppe bestehend aus einer offenen und einer geschlossenen Betriebsart ausgewählt sind.

4. Verfahren nach einem der Ansprüche 1 bis 3, umfassend das Bereitstellen eines sekundären Prismas, das ein zweites transparentes optisches Medium mit einem zweiten Brechungsindex umfasst, wobei der optische Schalter eine primäre Fläche des primären Prismas gegenüber einer sekundären Fläche des sekundären Prismas umfasst.

5. Verfahren nach einem der Ansprüche 1 bis 4, wobei der selektive Betrieb des optischen Schalters das Komprimieren der sekundären Fläche des sekundären Prismas relativ zur primären Fläche des primären Prismas umfasst, um eine transparente Schnittstelle zwischen diesen zu bilden.

6. Verfahren nach Anspruch 4 oder 5, wobei der selektive Betrieb des optischen Schalters das Dekomprimieren der sekundären Fläche des sekundären Prismas relativ zur primären Fläche des primären Prismas umfasst.

7. Verfahren nach einem der Ansprüche 1 bis 6, wobei der selektive Betrieb des optischen Schalters den verarbeiteten Lichtstrahl in mehrfache verarbeitete Lichtstrahlen spaltet.

8. Verfahren nach einem der Ansprüche 1 bis 7, wobei der selektive Betrieb des optischen Schalters die Kommunikation der mehrfachen verarbeiteten Lichtstrahlen von der Aufnahmekammer minimiert.

9. Verfahren nach einem der Ansprüche 1 bis 8, ferner umfassend:

   Umkehren der Richtung des Lichts, wodurch das Licht auf sich selbst umgeleitet wird und ein vollständig verarbeiteter Lichtstrahl erzeugt wird; und
   selektiver Betrieb des optischen Schalters, um den vollständig verarbeiteten Lichtstrahl zwischen dem primären Prisma und der Aufnahmekammer zu kommunizieren, wodurch mehrfache vollständig verarbeitete Lichtstrahlen erzeugt werden;
   Aufnehmen und wiederholtes Verbreiten der mehrfachen vollständig verarbeiteten Lichtstrahlen in der Aufnahmekammer entlang des festgelegten reflektierende Lichtpfads, was eine Leistungsausgabe erzeugt;
   Kommunizieren der Ausgabe an das Energiesystem.

10. Verfahren nach einem der Ansprüche 1 bis 9, ferner umfassend das Bewegen des einen oder der mehreren reflektierenden Prismen in einer ausreichend hohen Geschwindigkeit, um die verarbeiteten Lichtstrahlen rotzuverschieben.

11. Verfahren nach Anspruch 10, wobei die Rotverschiebung wirksam ist, um Restwärme zu reduzieren.

12. Verfahren nach einem der Ansprüche 1 bis 11, wobei das Energiesystem eine Kurbelwellenanordnung ist und die Menge der zum Energiesystem übertragenen Energie dazu führt dazu, dass sich die Kurbelwellenanordnung hin- und herbewegt.

13. Verfahren nach einem der Ansprüche 1 bis 12, ferner umfassend:

Umwandeln der Leistungsausgabe in eine elektrische Ausgabe; und
Sammeln der elektrischen Ausgabe.

14. Verfahren nach Anspruch 13, umfassend das Sammeln der elektrischen Ausgabe unter Verwendung einer H-Brückenschaltung.

15. Verfahren nach einem der Ansprüche 1 bis 14, wobei das Verfahren ferner Folgendes umfasst: das Bereitstellen als eine Fläche, ausgewählt aus der Gruppe bestehend aus der primären Fläche, der sekundären Fläche und einer Kombination davon, eines Linearschalters, der eine Reihe von linearen dreieckigen Prismen umfasst, die wirksam sind, um die verarbeiteten Lichtstrahlen im Wesentlichen totalzureflektieren.

16. Verfahren nach einem der Ansprüche 1 bis 15, ferner umfassend das Verbessern der Aufnahme von Licht in der Aufnahmekammer durch rasches Umschalten zwischen dem Komprimieren der primären Fläche auf eine Entfernung von 0 nm von der sekundären Fläche und dem raschen Dekomprimieren der primären Fläche auf eine Entfernung von mehr als 1000 nm von der sekundären Fläche.

17. Verfahren nach einem der Ansprüche 1 bis 16, wobei:

das eine oder die mehreren reflektierenden Prismen eine Anfangsgeschwindigkeit ($v_0$) aufweisen; und
eine höhere Arbeitsleistung durch das Energiesystems bei einer höheren Anfangsgeschwindigkeit erzeugt wird.

18. Verfahren nach einem der Ansprüche 1 bis 17, wobei die Menge der zum Energiesystem übertragenen Energie eine Arbeitsleistung (W) erzeugt, die gemäß der folgenden Gleichung berechnet wird:

$$W = \frac{1}{2} m \left( \left( \frac{p_0 A_m t_0}{m} \left( \frac{1 - (\rho_m \tau_s)^z}{1 - \rho_m \tau_s} \right) + v_0 \right)^2 - v_0^2 \right) \qquad (1)$$

wobei:

$p_0$ ein erster Strahlungsdruck auf ein reflektierendes Prisma ist, auf das die verarbeiteten Lichtstrahlen auftreffen;
$A_m$ ein Bereich des reflektierenden Prismas ist, auf den die verarbeiteten Lichtstrahlen auftreffen.
$t_0$ eine anfängliche Dauer des Auftreffens der verarbeiteten Lichtstrahlen auf das reflektierende Prisma ist;
M eine Masse des der reflektierenden Prismas und des Energiesystems ist;
$p_m$ eine wirksame Reflexion der verarbeiteten Lichtstrahlen von dem reflektierenden Prisma ist;
$\tau_s$ eine wirksame Übertragung des verarbeiteten Lichtstrahls durch den optischen Schalter ist;
z eine Anzahl eines wiederholten Auftreffens der verarbeiteten Lichtstrahlen auf das reflektierende Prisma ist; und
$v_0$ eine Anfangsgeschwindigkeit des reflektierenden Prismas ist, auf das die verarbeiteten Lichtstrahlen auftreffen.

19. Verfahren nach einem der Ansprüche 1 bis 18, ferner umfassend:

Sammeln und Konzentrieren von Licht unter Verwendung von einem oder mehreren kollektiven Spiegeln, um einen konzentrierten Lichtstrahl zu erzeugen;
Leiten des konzentrierten Lichtstrahls entlang des anfänglichen Lichtpfads und durch die Lichtexpander-/Lichtkontraktions-Vorrichtung, wodurch ein vollständig verarbeiteter konzentrierter Lichtstrahl erzeugt wird;
selektiver Betrieb des optischen Schalters, der die Kommunikation des vollständig verarbeiteten konzentrierten Lichtstrahls zwischen dem primären Prisma und der Aufnahmekammer steuert, wodurch der vollständig verarbeitete konzentrierte Lichtstrahl gespalten wird und mehrfache vollständig verarbeitete konzentrierte Lichtstrahlen erzeugt werden;
Aufnehmen und wiederholtes Verbreiten der mehrfachen verarbeiteten konzentrierten Lichtstrahlen entlang des festgelegten Lichtpfads in der Aufnahmekammer, was eine Leistungsausgabe erzeugt;
Kommunizieren der Leistungsausgabe an das Energiesystem.

20. Verfahren nach einem der Ansprüche 1 bis 19, ferner umfassend:

Leiten der verarbeiteten Lichtstrahlen in einem anfänglichen Winkel zur anfänglichen transparenten Oberfläche;
Reflektieren eines ersten Abschnitts der verarbeiteten Lichtstrahlen von der anfänglichen transparenten Oberfläche, um ein erstes Reflektieren zu erzeugen;
Leiten eines zweiten Abschnitts der verarbeiteten Lichtstrahlen durch die anfängliche reflektierende Oberfläche, durch einen ersten Teil des NTRS-Prismas in einem ersten Winkel zur ersten reflektierenden Oberfläche, wobei der erste Teil des NTRS-Prismas eine erste Menge von Energie absorbiert und eine ersten Rest der Lichtstrahlen erzeugt;
internes Totalreflektieren des ersten Rests der verarbeiteten Lichtstrahlen in einem zweiten Winkel relativ zur ersten reflektierenden Oberfläche durch einen zweiten Teil des NTRS-Prismas, wobei der zweite Teil des NTRS-Prismas eine zweite Menge von Energie absorbiert und einen zweiten Rest der verarbeiteten Lichtstrahlen erzeugt; und
internes Totalreflektiere des zweiten Rests der verarbeiteten Lichtstrahlen in einem dritten Winkel relativ zur zweiten reflektierenden Oberfläche und durch einen dritten Teil des NTRS-Prismas, wobei der dritte Teil der NTRS-Prismas eine dritte Menge von Energie absorbiert und einen dritten Rest der verarbeiteten Lichtstrahlen erzeugt;
Leiten des dritten Rests der verarbeiteten Lichtstrahlen durch die anfängliche transparente Oberfläche in einem endgültigen Winkel, um ein zweites Reflektieren zu erzeugen;
wobei die Kombination des ersten Reflektierens und des zweiten Reflektierens im Wesentlichen die verarbeiteten Lichtstrahlen totalreflektiert.

21. Verfahren nach Anspruch 20, wobei:

der anfängliche Winkel 90° ist;
der erste Winkel 45° ist;
der zweite Winkel 45° ist;
der dritte Winkel 45° ist; und
der endgültige Winkel 90° ist.

22. Photonenmaschine (800), umfassend einen oder mehrere Zylinder, umfassend:

ein primäres Prisma (1101) mit einem Lichtstrahleinlass und umfassend mehrfache interne totalreflektierende Flächen, die eine primäre Fläche umfassen, wobei das primäre Prisma einen polierten kristallinen Quarz mit einem vorgegebenen Brechungsindex umfasst;
eine Lichtexpander-/Lichtkontraktions-Vorrichtung (820), die mit dem Lichtstrahleinlass kommuniziert, wobei die Lichtexpander-/Lichtkontraktions-Vorrichtung Aspekte umfasst, die angepasst sind, um einen verarbeiteten Lichtstrahl durch das Erweitern des Durchmessers eines von einer vorgegebenen Richtung eintretenden Lichtstrahls zu erzeugen;
eine Aufnahmekammer (830), umfassend einen festgelegten reflektierenden Lichtpfad, der ein oder mehrere bewegliche reflektierende Prismen umfasst, die angeordnet sind, um die Leistungsausgabe an ein Energiesystem zu kommunizieren, wobei die Aufnahmekammer außerdem ein sekundäres Prisma (1101) umfasst;
einen optischen Schalter, der angepasst ist, um die Kompressionsgrenze zwischen dem primären Prisma und dem sekundären Prisma zu steuern;
wobei das eine oder die mehreren beweglichen reflektierenden Prismen (1310) eine nahezu totalreflektierende Oberfläche (NTRS) umfassen, die eine transparente Vorderfläche und mehrfache NTRS-Prismen umfasst, wobei jedes NTRS-Prisma eine anfängliche transparente Oberfläche (1310a) umfasst, die durch mindestens einen Abschnitt der transparenten Vorderfläche der NTRS definiert wird, wobei sich eine erste reflektierende Oberfläche (1310b) in einem ersten Winkel relativ zur anfänglichen transparenten Oberfläche erstreckt, um in einem zweiten Winkel mit einer zweiten reflektierenden Oberfläche (1310c) zu kommunizieren, die sich in einem dritten Winkel relativ zur anfänglichen transparenten Oberfläche erstreckt, wobei die NTRS-Prismen koaxial und konzentrisch nebeneinander auf der transparenten Vorderfläche angeordnet sind und angepasst sind, um den Lichtstrahl intern totalzureflektieren.

23. Photonenmaschine nach Anspruch 22 wobei:

> der erste Winkel 45° ist;
> der zweite Winkel 45° ist; und
> der dritte Winkel 45° ist.

24. Photonenmaschine nach Anspruch 22 oder 23, wobei der optische Schalter angepasst ist, um den verarbeiteten Lichtstrahl mehrfach zu spalten, um mehrfache verarbeitete Lichtstrahlen zu erzeugen.

25. Photonenmaschine nach einem der Ansprüche 22 bis 24, ferner angepasst, um die Richtung des Lichtstrahls umzukehren.

26. Photonenmaschine nach einem der Ansprüche 22 bis 25, wobei eine Fläche, die ausgewählt ist aus der Gruppe bestehend aus der primären Fläche, der sekundären Fläche und einer Kombination davon einen Linearschalter umfasst, der mehrfache dreieckige Prismen umfasst, die sich von der Fläche erstrecken, wobei jedes mehrfache dreieckige Prisma eine erste transparente Fläche umfasst, die sich in einem ersten Winkel relativ zur Fläche erstreckt, die in einem zweiten Winkel mit einer zweiten transparenten Fläche kommuniziert, die sich in einem dritten Winkel relativ zur Fläche erstreckt, wobei der Linearschalter wirksam ist, um Licht intern totalzureflektieren.

27. Photonenmaschine nach Anspruch 26, wobei:

> der erste Winkel 45° ist;
> der zweite Winkel 90° ist; und
> der dritte Winkel 45° ist.

28. Photonenmaschine nach einem der Ansprüche 22 bis 27, wobei das Energiesystem ein Kolben und eine Kurbelwellenanordnung ist.

29. Photonenmaschine nach einem der Ansprüche 22 bis 27, wobei das Energiesystem eine Federvorrichtung ist.

30. Photonenmaschine nach einem der Ansprüche 22 bis 29, umfassend mehrfache Zylinder.

31. Photonenmaschine nach einem der Ansprüche 22 bis 30, wobei das eine oder die mehreren reflektierenden Prismen betriebsmäßig mit einer H-Brückenschaltung, die wirksam ist, um eine elektrische Ausgabe zu sammeln, verbunden sind.

**Revendications**

1. Procédé de production d'une génération de puissance à partir d'un faisceau de lumière, le procédé comprenant :

> la fourniture d'un prisme primaire (1101) ayant une entrée de faisceau de lumière, le prisme primaire comprenant un premier matériau optique transparent de quartz cristallin poli ayant un indice de réfraction donné, le prisme primaire comprenant de multiples surfaces internes totalement réfléchissantes ;
> la production d'un faisceau de lumière traité en orientant un faisceau de lumière initial le long du trajet de lumière initial et dans une facette donnée d'un dispositif d'agrandissement/de contraction de lumière (820) communiquant avec le prisme primaire, le dispositif d'agrandissement/de contraction de lumière agrandissant des faisceaux de lumière qui entrent dans le dispositif d'agrandissement/de contraction de lumière à partir d'une direction donnée, produisant un faisceau de lumière sortant ;
> la réflexion du faisceau de lumière sortant depuis une surface interne totalement réfléchissante du prisme primaire jusqu'à une surface interne totalement réfléchissante suivante du prisme primaire jusqu'à ce que le faisceau de lumière sortant entre à nouveau dans le dispositif d'agrandissement/de contraction de lumière à partir de la même direction que le faisceau de lumière initial mais au niveau d'une facette différente, ainsi faisant tourner de façon répétée le faisceau de lumière sortant à l'intérieur du prisme primaire et produisant le faisceau de lumière traité ;

l'actionnement sélectif d'un commutateur optique comprenant un prisme secondaire, en commandant la limite de compression entre le prisme primaire et le prisme secondaire afin de commander la communication du faisceau de lumière traité entre le prisme primaire et une chambre de confinement (830) qui inclut le prisme secondaire (1101) ;

le confinement et la propagation répétée du faisceau de lumière traité le long d'un trajet de lumière prédéterminé dans la chambre de confinement, produisant un faisceau de lumière traité propagé, le trajet de lumière prédéterminé comprenant un ou plusieurs prismes réfléchissants mobiles (1310) comprenant une surface quasi-totalement réfléchissante (NTRS) comprenant une surface avant transparente et de multiples prismes NTRS, chaque prisme NTRS comprenant une surface transparente initiale (1310a) définie par au moins une portion de la surface avant transparente de la NTRS, une première surface réfléchissante (1310b) s'étendant à un premier angle relativement à la surface transparente initiale pour communiquer, à un deuxième angle, avec une seconde surface réfléchissante (1310c) s'étendant à un troisième angle relativement à la surface transparente initiale, les multiples prismes NTRS étant agencés de façon coaxialement et concentriquement adjacente les uns par rapport aux autres sur l'avant transparent, le trajet de lumière prédéterminé passant à travers la surface transparente initiales des prismes NTRS, et les prismes NTRS étant adaptés pour réfléchir de façon totalement interne le faisceau de lumière ;

la communication de la génération de puissance du faisceau de lumière traité propagé à un système d'énergie communiquant avec les un ou plusieurs prismes réfléchissants mobiles, dans lequel les faisceaux de lumière traités ont un impact répété sur les un ou plusieurs prismes réfléchissants mobiles.

2. Procédé selon la revendication 1, dans lequel :

le premier angle est 45° ;
le deuxième angle est 45° ; et,
le troisième angle est 45°.

3. Procédé selon la revendication 1 ou 2, dans lequel l'actionnement sélectif du commutateur optique comprend le changement du commutateur optique entre des modes sélectionnés à partir du groupe constitué d'un mode ouvert et d'un mode fermé.

4. Procédé selon l'une quelconque des revendications 1 à 3, comprenant la fourniture d'un prisme secondaire comprenant un second matériau optique transparent ayant un second indice de réfraction, le commutateur optique comprenant une face primaire du prisme primaire opposée à une face secondaire du prisme secondaire.

5. Procédé selon l'une quelconque des revendications 1 à 4, dans lequel l'actionnement sélectif du commutateur optique comprend la compression de la face secondaire du prisme secondaire relativement à la face primaire du prisme primaire pour former une interface transparente entre celles-ci.

6. Procédé selon la revendication 4 ou 5 dans lequel l'actionnement sélectif du commutateur optique comprend la décompression de la face secondaire du prisme secondaire relativement à la face primaire du prisme primaire.

7. Procédé selon l'une quelconque des revendications 1 à 6, dans lequel l'actionnement sélectif du commutateur optique divise le faisceau de lumière traité en de multiples faisceaux de lumière traités.

8. Procédé selon l'une quelconque des revendications 1 à 7, dans lequel l'actionnement sélectif du commutateur optique minimise la communication des multiples faisceaux de lumière traités à partir de la chambre de confinement.

9. Procédé selon l'une quelconque des revendications 1 à 8, comprenant en outre :

l'inversion de la direction de lumière, ainsi réorientant la lumière sur elle-même et produisant un faisceau de lumière complètement traité ; et,

l'actionnement sélectif du commutateur optique pour communiquer le faisceau de lumière complètement traité entre le prisme primaire et la chambre de confinement, ainsi produisant de multiples faisceaux de lumière complètement traités ;

le confinement et la propagation répétée des multiples faisceaux de lumière complètement traités dans la chambre de confinement le long du trajet de lumière réfléchissant prédéterminé, produisant une génération de puissance ;
la communication de la génération au système d'énergie.

**10.** Procédé selon l'une quelconque des revendications 1 à 9, comprenant en outre le déplacement des un ou plusieurs prismes réfléchissants à une vitesse suffisamment élevée pour décaler vers le rouge les faisceaux de lumière traités.

**11.** Procédé selon la revendication 10, dans lequel le décalage vers le rouge est efficace pour réduire la chaleur résiduelle.

**12.** Procédé selon l'une quelconque des revendications 1 à 11, dans lequel le système d'énergie est un ensemble à vilebrequin et la quantité d'énergie transférée au système d'énergie fait en sorte que l'ensemble à vilebrequin se déplace en va-et-vient.

**13.** Procédé selon l'une quelconque des revendications 1 à 12, comprenant en outre :

la conversion de la génération de puissance en génération électrique ; et,
la collecte de la génération électrique.

**14.** Procédé selon la revendication 13, comprenant la collecte de la génération électrique utilisant un circuit à pont H.

**15.** Procédé selon l'une quelconque des revendications 1 à 14, dans lequel le procédé comprend en outre la fourniture, en tant que face sélectionnée à partir du groupe constitué de la face primaire, de la face secondaire, et d'une association de celles-ci, d'un commutateur linéaire comprenant une série de prismes triangulaires linéaires efficaces pour réfléchir de façon sensiblement totale les faisceaux de lumière traités.

**16.** Procédé selon l'une quelconque des revendications 1 à 15, comprenant en outre l'amélioration du confinement de lumière dans la chambre de confinement en permutant rapidement entre la compression de la face primaire jusqu'à une distance de 0 nm par rapport à la face secondaire, et rapidement la décompression de la face primaire jusqu'à une distance supérieure à 1000 nm par rapport à la face secondaire.

**17.** Procédé selon l'une quelconque des revendications 1 à 16, dans lequel :

les un ou plusieurs prismes réfléchissants ont une vitesse initiale ($v_0$) ; et,
une quantité supérieure de travail est générée par le système d'énergie à une vitesse initiale supérieure.

**18.** Procédé selon l'une quelconque des revendications 1 à 17, dans lequel la quantité d'énergie transférée au système d'énergie génère une quantité de travail (W) calculée selon l'équation suivante :

$$W = \frac{1}{2}m\left(\left(\frac{p_0 A_m t_0}{m}\left(\frac{1-(\rho_m \tau_s)^z}{1-\rho_m \tau_s}\right)+v_0\right)^2 - v_0^2\right) \qquad (1)$$

dans laquelle :

$p_0$ est une pression de rayonnement initial sur un prisme réfléchissant sur lequel les faisceaux de lumière traités ont un impact ;
$A_m$ est une superficie du prisme réfléchissant sur lequel les faisceaux de lumière traités ont un impact ;
$t_0$ est une durée initiale d'impact des faisceaux de lumière traités sur le prisme réfléchissant ;
$m$ est une masse du prisme réfléchissant et du système d'énergie ;
$p_m$ est un facteur de réflexion efficace des faisceaux de lumière traités par le prisme réfléchissant ;
$\tau_s$ est une transmission efficace du faisceau de lumière traité par l'intermédiaire du commutateur optique ;
$z$ est un nombre d'impacts répétés des faisceaux de lumière traités contre le prisme réfléchissant ; et,
$v_0$ est une vitesse initiale du prisme réfléchissant sur lequel les faisceaux de lumière traités ont un impact.

**19.** Procédé selon l'une quelconque des revendications 1 à 18, comprenant en outre :

la collecte et la concentration de lumière en utilisant un ou plusieurs miroirs collectifs pour produire un faisceau de lumière concentré ;

l'orientation du faisceau de lumière concentré le long du trajet de lumière initial et à travers le dispositif d'agrandissement/de contraction de lumière, ainsi produisant un faisceau de lumière concentré complètement traité ;

l'actionnement sélectif du commutateur optique commandant la communication du faisceau de lumière concentré complètement traité entre le prisme primaire et la chambre de confinement, ainsi divisant le faisceau de lumière concentré complètement traité et produisant de multiples faisceaux de lumière concentrés complètement traités ;

le confinement et la propagation répétée des multiples faisceaux de lumière concentrés traités le long du trajet de lumière prédéterminé dans la chambre de confinement, produisant une génération de puissance ;

la communication de la génération de puissance au système d'énergie.

**20.** Procédé selon la revendication selon l'une quelconque des revendications 1 à 19, comprenant en outre :

l'orientation des faisceaux de lumière traités à un angle initial par rapport à la surface transparente initiale ;

la réflexion d'une première portion des faisceaux de lumière traités à partir de la surface transparente initiale pour produire une première réflexion ;

le passage d'une seconde portion des faisceaux de lumière traités à travers la surface réfléchissante initiale, à travers une première partie du prisme NTRS à un premier angle par rapport à la première surface réfléchissante, la première partie du prisme NTRS absorbant une première quantité d'énergie et produisant un premier reste des faisceaux de lumière ;

la réflexion totalement interne du premier reste des faisceaux de lumière traités à un deuxième angle relativement à la première surface réfléchissante à travers une deuxième partie du prisme NTRS, la deuxième partie du prisme NTRS absorbant une deuxième quantité d'énergie et produisant un deuxième reste des faisceaux de lumière traités ; et

la réflexion totalement interne du deuxième reste des faisceaux de lumière traités à un troisième angle relativement à la seconde surface réfléchissante et à travers une troisième partie du prisme NTRS, la troisième partie du prisme NTRS absorbant une troisième quantité d'énergie et produisant un troisième reste des faisceaux de lumière traités ;

le passage du troisième reste des faisceaux de lumière traités à travers la surface transparente initiale à un angle final pour produire une seconde réflexion ;

dans lequel la combinaison de la première réflexion et de la seconde réflexion réfléchit de façon sensiblement totale les faisceaux de lumière traités.

**21.** Procédé selon la revendication 20, dans lequel :

l'angle initial est 90° ;

le premier angle est 45° ;

le deuxième angle est 45° ;

le troisième angle est 45° ; et,

l'angle final est 90°.

**22.** Moteur à photons (800) comprenant un ou plusieurs cylindres, comprenant :

un prisme primaire (1101) ayant une entrée de faisceau de lumière et comprenant de multiples faces internes totalement réfléchissantes comprenant une face primaire, le prisme primaire comprenant du quartz cristallin poli ayant un indice de réfraction donné ;

un dispositif d'agrandissement/de contraction de lumière (820) communiquant avec l'entrée de faisceau de lumière, le dispositif d'agrandissement/de contraction de lumière comprenant des facettes adaptées pour produire un faisceau de lumière traité en agrandissant le diamètre d'un faisceau de lumière entrant à partir d'une direction donnée ;

une chambre de confinement (830) comprenant un trajet de lumière réfléchissant prédéterminé, comprenant un ou plusieurs prismes réfléchissants mobiles agencés pour communiquer une génération de puissance avec un système d'énergie, la chambre de confinement incluant également un prisme secondaire (1101) ;

un commutateur optique adapté pour commander la limite de compression entre le prisme primaire et le prisme secondaire ;

les un ou plusieurs prismes réfléchissants mobiles (1310) comprenant une surface quasi-totalement réfléchissante (NTRS), comprenant une surface avant transparente et de multiples prismes NTRS, chaque prisme NTRS comprenant une surface transparente initiale (1310a) définie par au moins une portion de la surface avant transparente de la NTRS, une première surface réfléchissante (1310b) s'étendant à un premier angle relativement à la surface transparente initiale pour communiquer, à un deuxième angle, avec une seconde surface réfléchissante (1310c) s'étendant à un troisième angle relativement à la surface transparente initiale, les prismes NTRS étant agencés de façon coaxialement et concentriquement adjacente les uns par rapport aux autres sur la surface avant transparente et étant adaptés pour réfléchir de façon totalement interne le faisceau de lumière.

23. Moteur à photons selon la revendication 22, dans lequel :

le premier angle est 45° ;
le deuxième angle est 45° ; et,
le troisième angle est 45°.

24. Moteur à photons selon la revendication 22 ou 23, le commutateur optique étant adapté pour diviser le faisceau de lumière traité de multiples fois pour produire de multiples faisceaux de lumière traités.

25. Moteur à photons selon l'une quelconque des revendications 22 à 24, étant en outre adapté pour inverser la direction du faisceau de lumière.

26. Moteur à photons selon l'une quelconque des revendications 22 à 25, dans lequel une face sélectionnée à partir du groupe constitué de la face primaire, de la face secondaire, et d'une association de celles-ci, comprend un commutateur linéaire comprenant de multiples prismes triangulaires s'étendant à partir de la face, chaque multiple prisme triangulaire comprenant une première face transparente s'étendant à un premier angle relativement à la face communiquant à un deuxième angle avec une seconde face transparente s'étendant à un troisième angle relativement à la face, le commutateur linéaire étant efficace pour réfléchir, de façon totalement interne, de la lumière.

27. Moteur à photons selon la revendication 26, dans lequel :

le premier angle est 45° ;
le deuxième angle est 90° ; et,
le troisième angle est 45°.

28. Moteur à photons selon l'une quelconque des revendications 22 à 27, dans lequel le système d'énergie est un piston et un ensemble à vilebrequin.

29. Moteur à photons selon l'une quelconque des revendications 22 à 27, dans lequel le système d'énergie est un dispositif à ressort.

30. Moteur à photons selon l'une quelconque des revendications 22 à 29, comprenant de multiples cylindres.

31. Moteur à photons selon l'une quelconque des revendications 22 à 30, dans lequel les un ou plusieurs prismes réfléchissants sont fonctionnellement associés à un circuit à pont H efficace pour collecter une génération électrique.

*FIG. 1*

**FIG. 2**

**FIG. 5**

306c

300 →

314

306

307c
307

302

312

310

308

308

FIG. 3

y

z

AA     AA

106c     106

114 {     170     d

107c     107

FIG. 1A

y

z

AA

106c     106     d'

114

107c     107

AA'

FIG. 1B

**FIG. 4A**

**FIG. 4B**

**FIG. 6A**

**FIG. 6B**

700 →

706

762

760

706a

714

706c

707c

707

**FIG. 7A**

706

762

760

AA

704d

AA

706c

**FIG. 7E**

706

762

760

AA

706c

**FIG. 7F**

780    706"    780

7C    7C

784

762    782    786    706'

*FIG. 7B*

AA    Reflection    Contraction    Expasion
AA    706"
762
Quartz
780

AA

Air

782    AA

*FIG. 7D*

706'

786

784

762

FIG. 7C

762

760

706'

714

7H

AA'

7H

707'

FIG. 7G

AA'

FIG. 7H

FIG. 8

*FIG. 9*

*FIG. 10*

(A)

Light

$d_r$

1101

1101

(B)

Light

$d_t < d < d_r$

1101

1101

(C)

Light

$d_t \approx 0$

1101

1101

*FIG. 11*

Total P-Polarized Transmission, $T_p^{tot}$ vs Gap distance, d

FIG. 12A

Total S-Polarized Transmission, $T_s^{tot}$ vs Gap distance, d

FIG. 12B

*FIG. 13A*

*FIG. 13B*

*FIG. 14A*

Temporal ray-tracing continuum diagram

variable optics
time range,
$t_0$ - $t_1$

linearly distributed
n samples at $q_1$"

variable optic
switch, $t_2$ - $t_3$

$t_0$          $t_1$

model.1

$t_0$          $t_1$          $t_2$     $t_3$          $t_\infty$

containment.1
m samples moved to
enclosure at
$q_2$" = $\Delta F$ $q_1$"

FIG. 15

Temporal ray-tracing Flat land diagram

FIG. 16

l, length     $t_n$, thickness

dQ         $dQ_{trans}$

1    2       ...      n    n+1

x-    x+

$dQ_{x+}$

$dQ_{n,abs}$

$dQ_{x-}$

*FIG. 17*

FIG. 18

810

820

1900

950

1940

830

*FIG. 19*

1940

1960

*FIG. 20 A*

1960

Total Internal Reflection (TIR)

*FIG. 20B*

1960

1960a

*FIG. 20C*

**REFERENCES CITED IN THE DESCRIPTION**

**Patent documents cited in the description**

- US 60833336 B
- US 836774 A

- US 2004008495 W